# EUROPEAN PATENT APPLICATION

(11) **EP 4 803 240 A1**
(43) Date of publication of application: **09.09.2026**
(21) Application number: 24885524.9
(22) Date of filing: 21.10.2024
(51) Int. Cl.: B23K 20/12

(54) **METHOD FOR MANUFACTURING FILET-JOINED COMPONENT BY USING SYNCHRONOUS STIR-JOINING, AND SYNCHRONOUS STIR-JOINING DEVICE FOR FILET JOINING**

(30) Priority: 01.11.2023 WO PCT/JP2023/039467; 05.02.2024 JP 2024015457; 05.02.2024 JP 2024015458; 05.02.2024 JP 2024015459
(71) Applicant: Keihin Ramtech Co., Ltd., Yokohama-shi, Kanagawa 2220033 (JP)
(72) Inventor: SATO, Ippei, Yokohama-shi, Kanagawa 222-0033 (JP); SHIBATA, Naonori, Yokohama-shi, Kanagawa 222-0033 (JP); KAWASHIMA, Mitsuhiro, Yokohama-shi, Kanagawa 222-0033 (JP)
(74) Representative: Reichert & Lindner Partnerschaft Patentanwälte
(86) International application number: PCT/JP2024/037462
(87) International publication number: WO 2025/094751

(57) **Abstract**

The present teaching makes it possible to perform fillet welding stably while suppressing roughness and turbulence of the plastic flow portion, without requiring an auxiliary tool, being less susceptible to constraints of welding conditions, and allowing the fillet welding to be carried out simply and swiftly.

A manufacturing method for a fillet-welded component is a manufacturing method including a fillet welding step of fillet welding two welding object members. The fillet welding step is implemented by a synchronized stir welding apparatus. The synchronized stir welding apparatus includes: an output shaft; a driving mechanism configured to rotate the output shaft; and a pin portion provided on a distal end of the output shaft, configured to be rotationally driven by rotation transmitted from the driving mechanism, and inserted into the two welding object members during synchronized stirring. The pin portion has, between the output shaft and the pin portion, a clearance that allows vibration of the pin portion with respect to the output shaft, the clearance being a void or substantially a void, and by the clearance, the pin portion being free or substantially free with respect to the output shaft within a range of the clearance. The fillet welding step inserts the pin portion into the two welding object members at an inner corner formed by the two welding object members while the pin portion rotates, thereby performing fillet welding by synchronized stir welding.

## Description

### Technical Field

The present teaching relates to synchronized stir welding (SSW), and more specifically, to a manufacturing method for a fillet-welded component and a synchronized stir welding apparatus for fillet welding.

### Background Art

Patent Literatures 1 to 5 (PTL 1 to 5) all relate to fillet welding using friction stir welding.

PTL 1 relates to a friction stir welding probe configured to avoid irregularities and defects occurring during welding in a fillet portion. A holding block in the shape of a reverse isosceles triangular prism, a probe body, and a stirring pin are used to perform friction stir welding on a fillet portion of a welding object material. The holding block supports the stirring pin and serves to apply pressure to the plastic flow portion to suppress occurrence of irregularities and deformations in the plastic flow portion.

PTL 2 relates to a tool that performs friction stir welding on a fillet portion of a pair of metal members. The tool includes a stirring pin and a base block. The base block has a narrow main body part and a detachable shoulder part. With this structure, a worn portion of the tool can be efficiently replaced, and the overall cost can be reduced. The base block supports the stirring pin and applies pressure to the plastic flow portion, similarly to the holding block of PTL 1.

PTL 3 relates to a friction stir welding tool for performing fillet welding by using friction stir welding. The friction stir welding tool has a friction stir rotor and a friction stir stator. The friction stir rotor has a friction stir probe and a friction stir main body part. The friction stir rotor further has a shoulder part that couples the friction stir probe and the friction stir main body part, and that is inclined outward from a center of the friction stir main body part. During friction stir welding, the rotating friction stir probe is press-inserted into the welding object member and stirs the welding object member. The rotating shoulder part is exposed from a slit of the friction stir stator, abuts the welding object member, and stirs the welding object member. The friction stir stator is configured to stabilize welding by applying pressure to the plastic flow portion. Both sides of the slit (i.e., both sides of a line contact position between the shoulder part and the welding object member in a circumferential direction of the shoulder part) are covered by the friction stir stator and are spatially closed. On both sides of the slit, the friction stir stator stabilizes welding by applying pressure to the plastic flow portion.

PTL 4 relates to friction stir welding apparatus that performs friction stir welding on a fillet portion. The friction stir welding apparatus is configured to perform friction stir welding at a stir axis while applying pressure to the plastic flow portion by a fixed shoulder.

PTL 5 relates to technology to perform friction stir welding on a T-shaped structure. The T-shaped structure is formed by abutting a second welding object member to a first welding object member such that the second welding object member is positioned in a standing posture relative to the first welding object member. The T-shaped structure has a first fillet portion and a second fillet portion on both sides of the second welding object member positioned in the standing posture. In this technology, the material softened on the first fillet portion side is supported by the fixed shoulder, so that a shape of the fillet portion in the first fillet portion is maintained while the second welding object member is welded to the first welding object member. On the other hand, a pressing roller is pressed on the second fillet portion. In this way, the shape of the fillet portion in the second fillet portion is maintained.

As mentioned above, the holding block in PTL 1, the base block in PTL 2, the friction stir stator in PTL 3, the fixed shoulder in PTL 4, and the fixed shoulder in PTL 5 are auxiliary tools dedicated to fillet welding by friction stir welding. These auxiliary tools are each configured to move along the fillet portion together with the stirring pin when the rotating stirring pin moves along the fillet portion to perform friction stir welding on the fillet portion, and to apply pressure while abutting a friction stir welded joint portion.

### Citation List

### Patent Literature

PTL 1: Japanese Patent Application Laid-Open No. 1999-320128
PTL 2: Japanese Patent Application Laid-Open No. 2011-79031
PTL 3: Japanese Patent Application Laid-Open No. 2011-206786
PTL 4: Japanese Patent Application Laid-Open No. 2013-166159
PTL 5: Japanese Patent Application Laid-Open No. 2020-131256

### Summary of Invention

### Technical Problem

The present teaching aims to provide a method and an apparatus that enable fillet welding to be performed stably while suppressing roughness and turbulence of a plastic flow portion, without requiring an auxiliary tool, being less susceptible to constraints of welding conditions, and allowing the fillet welding to be carried out simply and swiftly.

### Solution to the Problem

As a result of the earnest investigation with the above taken into account, the inventors of the present teaching discovered the following.

Conventionally, in fillet welding using friction stir welding, a welding method has been studied based on a thought of how to suppress roughness and turbulence on the surface of a plastic flow portion by using the above-described auxiliary tool. However, since the auxiliary tool moves while applying pressure to the plastic flow portion, there has been a problem in that the plastic flow portion inevitably has dragged marks, also referred to as galling. Therefore, the auxiliary tool needed to be designed to suppress occurrence of galling as much as possible. Specifically, the auxiliary tool needs to be designed in accordance with a shape and a material of a welding object member, a shape of an inner corner, and the like, and as a result, there has been a problem in that dedicated equipment such as the above-described auxiliary tool is required.

Further, in order to suppress galling, the auxiliary tool needs to be installed with high accuracy, which leads to a problem in that the installation itself is difficult and requires time. Further, since friction stir welding is performed while dragging the auxiliary tool, the welding speed cannot be increased, and particularly, when suppression of galling is taken into consideration, further constraints are imposed on the welding speed.

In addition, friction stir welding tends to increase the temperature of the plastic flow portion. When friction stir welding is performed, the surface of the plastic flow portion is covered by the auxiliary tool, and the plastic flow portion is dragged by the auxiliary tool. Therefore, in fillet welding by friction stir welding, temperature issues are particularly likely to arise, and constraints may occur on a material of the welding object member as well as on welding conditions such as a rotation speed and an insertion depth of the stirring pin.

In contrast, the inventors of the present teaching shifted their thinking from conventional ideas and attempted fillet welding using synchronized stir welding. Synchronized stir welding is a technique disclosed in, for example, Japanese Patent Application Laid-Open No. 7445355, Japanese Patent Application Laid-Open No. 7526535, Japanese Patent Application Laid-Open No. 7526536, and Japanese Patent Application Laid-Open No. 7526537. Note that the disclosure of Japanese Patent Application Laid-Open No. 7445355, Japanese Patent Application Laid-Open No. 7526535, Japanese Patent Application Laid-Open No. 7526536, and Japanese Patent Application Laid-Open No. 7526537 are incorporated herein by reference.

As a result of the above attempt, the inventors of the present teaching found that a discharge pressure of a plastic flow component due to synchronized stir welding is sufficiently lower than that in friction stir welding, thereby suppressing spread of flash. The inventors of the present teaching found that, by utilizing a low discharge pressure of a plastic flow component in synchronized stir welding, fillet welding can be performed without using an auxiliary tool, thereby completing the present teaching. This knowledge is quite different from the conventional friction stir welding described above. In addition, the above-described patent literatures do not disclose the low discharge pressure of the plastic flow component due to synchronized stir welding, nor do they disclose fillet welding. In other words, the above-described patent literatures neither disclose nor suggest using a low discharge pressure of a plastic flow component in synchronized stir welding for fillet welding. Thus, even a person skilled in the art would not readily arrive at this finding from the conventional technique. In the present teaching, the following configurations can be adopted.
(1) A manufacturing method for a fillet-welded component by synchronized stir welding,
   the manufacturing method includes a fillet welding step of fillet welding two welding object members,
   wherein the fillet welding step is implemented by a synchronized stir welding apparatus,
   wherein the synchronized stir welding apparatus comprises: an output shaft; a driving mechanism configured to rotate the output shaft; and a pin portion provided on a distal end of the output shaft, configured to be rotationally driven by rotation transmitted from the driving mechanism, and to be inserted into the two welding object members during synchronized stirring, the pin portion being configured such that there exists, between the output shaft and the pin portion, a clearance that allows vibration of the pin portion with respect to the output shaft, the clearance being a void or substantially a void, and due to the clearance, the pin portion being free or substantially free with respect to the output shaft within a range of the clearance, and
   wherein, in the fillet welding step, the rotating pin portion is inserted into the two welding object members at an inner corner of an angle formed by the two welding object members, thereby performing fillet welding by synchronized stir welding.

According to the manufacturing method of (1), fillet welding is performed by synchronized stir welding by utilizing a low discharge pressure of a plastic flow component due to synchronized stir welding. As a result, the spread of the flash is suppressed. Therefore, roughness and turbulence on a surface of the plastic flow portion can be suppressed without using an auxiliary tool. By performing synchronized stir welding without an auxiliary tool, occurrence of galling can be suppressed. There is no need for highly accurate installation of the auxiliary tool, and synchronized stir welding can be swiftly performed. Since there is no need to perform synchronized stir welding while dragging the auxiliary tool, the welding speed can be increased. Since an increase in a welding temperature can also be suppressed, constraints are less likely to occur on welding conditions such as a material of the welding object members and a rotation speed and an insertion depth of the stirring pin. Therefore, according to the manufacturing method (1), it is possible to perform fillet welding stably while suppressing roughness and turbulence of the plastic flow portion, without requiring an auxiliary tool, being less susceptible to constraints of welding conditions, and allowing the fillet welding to be carried out simply and swiftly.

Conventionally, as shown in PTL 1 to 5, it has been believed that, in fillet welding using friction stir welding, roughness and turbulence on a surface of a plastic flow portion cannot be suppressed unless an auxiliary tool with a fixed shoulder is used. Therefore, research and development had been conducted exclusively with respect to a design and use of auxiliary tools. The present teaching overcomes such a technological bias and enables suppression of roughness and turbulence on a surface of a plastic flow portion without using an auxiliary tool.

In addition, conventionally, an auxiliary tool has been used to suppress roughness and turbulence on a surface of a plastic flow portion; however, as described above, use of the auxiliary tool has caused many problems. Suppression of roughness and turbulence on a surface of a plastic flow portion without using an auxiliary tool has been a technical challenge that has long been desired but has not been successfully achieved. The present teaching has solved such a technical challenge that has long been desired to be addressed. The manufacturing method for a fillet-welded component by synchronized stir welding can also be described as a fillet welding method using synchronized stir welding.

The "clearance" allows the pin portion to vibrate with respect to the output shaft. The pin portion can be configured such that due to the clearance, at a time of synchronized stirring, a vibration of the pin portion has a larger amplitude and/or a higher frequency than a vibration of the output shaft. The output shaft of the driving mechanism, at a time of synchronized stirring, vibrates along with rotation received from the driving mechanism. This vibration is also called a base vibration. The base vibration is one that unavoidably occurs in synchronized stirring. The pin portion can be configured such that at the time of synchronized stirring, the vibration of the pin portion has a larger amplitude and/or a higher frequency than the base vibration. The pin portion can be configured to rotate while moving so as to parry the plastically flowing welding object member within a range of the clearance, instead of resisting the plastically flowing welding object member, during synchronized stirring. This movement generates the vibration of the pin portion. That is, the vibration of the pin portion is caused by the clearance. The vibration of the pin portion is not a vibration caused by an output from a driving source other than the driving mechanism. The vibration of the pin portion is less likely to hinder the plastic flow of the welding object member. Moreover, the vibration of the pin portion is capable of synchronization with the plastic flow of the welding object member. Thus, the vibration of the pin portion can amplify the plastic flow of the welding object member. Thanks to this vibration of the pin portion, welding with a high strength and with occurrence of a welding defect suppressed can be obtained. In addition, the tilt angle (advanced angle) of the output shaft may be zero degrees. Even when the tilt angle is zero degrees, it is possible to provide sound synchronized stir welding. Since the above-described vibration of the pin portion can be obtained due to the clearance, a complicated main shaft mechanism is not necessary. Generation of excessive frictional heat can be suppressed. Generation of excessive friction applied to the pin portion can be suppressed. The vibration of the pin portion can suppress transmission of a vibration from the downstream side to the upstream side of the clearance in a power transmission path extending from the driving mechanism to the pin portion. A reduced load can be applied to the output shaft. In the above (1), the low discharge pressure of the plastic flow component due to synchronized stir welding is utilized.

The synchronized stir welding apparatus is not particularly limited, and does not always have to be an apparatus dedicated to synchronized stir welding. Other examples of the welding apparatus include a machining center, a robot, a milling machine, a multitasking machine, a general-purpose machine, and a portable type apparatus having such a size that a user can hold it in hand and perform synchronized stir welding. Control conditions (such as the position, load, main shaft load, heat, pressing) for the synchronized stir welding apparatus, its accessory mechanism, and the like, are not particularly limited, either. Welding conditions (the feed speed, rotation speed, welding temperature, forward angle) are not particularly limited, either. A material of the welding object member is not particularly limited. The welding object member may be made of either a homogeneous material or a heterogeneous material. Although the clearance, in the embodiment described later, is formed by the presence of a key (a fitting key or a fixing key), this is a non-limiting example. A structure for forming the clearance is not particularly limited, and a conventionally known structure is adoptable. Instead of the key, a member such as a bolt, a pin, or a spherical body may be adoptable as a member for forming the clearance. Alternatively, the shape of the rotating member for synchronized stirring itself may be used to form the clearance. It may be acceptable that the rotating member for synchronized stirring can be divided into plural (for example, two) members so that the clearance is formed when adjacent ones of the members are fitted to each other. The amplitude and frequency of the vibration are not particularly limited, but may be adjustable by changing the amount of the clearance or the weight of a member on the downstream side of the clearance in the power transmission path extending from the driving mechanism to the pin portion. For example, the change of the weight can be achieved by, for example, placing a weight. In the welding apparatus, the driving mechanism includes a rotating machine. The rotating machine may be, for example, a rotating electric machine or an internal combustion engine. The driving mechanism may include a transmission that changes the speed of rotation outputted from the rotating machine and outputs the changed speed. The transmission may be either a speed reducer or a speed increaser. In a case of the driving mechanism including the transmission, an output shaft of the transmission corresponds to the output shaft of the driving mechanism. In a case of the driving mechanism including no transmission, an output shaft of the rotating machine corresponds to the output shaft of the driving mechanism. In an embodiment, both a backlash and a margin within the driving mechanism do not correspond to the clearance. In an embodiment, the clearance is disposed downstream of an upstream edge of the output shaft of the driving mechanism in the power transmission path extending from the driving mechanism to the pin portion.

The void is a space between the output shaft and the pin portion. Being substantially void means being allowed to have liquid or an elastic body therein to such an extent that the vibration of the pin portion at a time of synchronized stirring can have a larger amplitude and/or a higher frequency than the vibration of the output shaft.

Being free means a state of not being under physical or mechanical restraint. Being substantially free means being free enough to give the vibration of the pin portion at a time of synchronized stirring a larger amplitude and/or a higher frequency than those of the vibration of the output shaft so that restraint of the distal end portion relative to the output shaft is permissible within a range of the freedom. The restraint is, for example, a friction between adjacent members of the output shaft and the pin portion or an external stress attributable to an elastic body or liquid, which will be described later.

(2) The manufacturing method according to (1), wherein
the synchronized stir welding apparatus comprises a rotating member for synchronized stirring provided on the output shaft and either including the pin portion or configured such that the pin portion is detachably attachable thereto, and
the rotating member for synchronized stirring is configured, in a state of being provided on the output shaft, to create a clearance between the output shaft and the pin portion, the clearance allowing vibration of the pin portion relative to the output shaft.

Therefore, according to the manufacturing method (2), similarly to (1), it is possible to perform fillet welding stably while suppressing roughness and turbulence of the plastic flow portion, without requiring an auxiliary tool, being less susceptible to constraints of welding conditions, and allowing the fillet welding to be carried out simply and swiftly.

It may be acceptable that the rotating member for synchronized stirring has the clearance provided in the rotating member for synchronized stirring itself. The rotating member for synchronized stirring may be configured such that the clearance between the rotating member for synchronized stirring and the output shaft is formed when the rotating member for synchronized stirring is attached to the output shaft. The rotating member for synchronized stirring may be configured such that the rotating member for synchronized stirring does not include the pin portion, but the pin portion is attached to the rotating member for synchronized stirring, to form the clearance between the rotating member for synchronized stirring and the pin portion.

(3) The manufacturing method according to (1) or (2), wherein
the pin portion is configured such that due to the clearance, at a time of synchronized stirring, a vibration of the pin portion has a larger amplitude and/or a higher frequency than a vibration of the output shaft.

According to the manufacturing method (3), since a discharge pressure of a plastic flow component due to synchronized stir welding can be kept low, fillet welding can be performed stably while suppressing roughness and turbulence of a plastic flow portion, without requiring an auxiliary tool, being less susceptible to constraints of welding conditions, and being carried out simply and swiftly.

(4) The manufacturing method according to any one of (1) to (3), wherein
the pin portion is configured such that a vibration of the pin portion is passively generated by contact with plastic flow components of the two welding object members within a range of the clearance.

According to the manufacturing method of (4), during synchronized stirring, the pin portion rotates while moving so as to parry the plastic flow component within a range of the clearance, instead of resisting the plastic flow component. As a result, since the discharge pressure of the plastic flow component due to synchronized stir welding can be kept low, fillet welding can be performed stably while suppressing roughness and turbulence of the plastic flow portion, without requiring an auxiliary tool, being less susceptible to constraints of welding conditions, and being carried out simply and swiftly.

(5) The manufacturing method according to any one of (1) to (4), wherein
the pin portion is configured such that, due to the clearance, a vibration of the pin portion is generated in at least one of an axial direction, a circumferential direction, and a radial direction of the pin portion.

According to the manufacturing method (5), since a discharge pressure of a plastic flow component due to synchronized stir welding can be kept low, fillet welding can be performed stably while suppressing roughness and turbulence of a plastic flow portion, without requiring an auxiliary tool, being less susceptible to constraints of welding conditions, and being carried out simply and swiftly.

If the clearance between the output shaft and the pin portion is provided in the axial direction, the pin portion is capable of vibrating in the axial direction. If the clearance is provided in the circumferential direction, the pin portion is capable of vibrating in the circumferential direction. If the clearance is provided in the radial direction, the pin portion is capable of vibrating in the radial direction. The clearance is provided in at least one of the axial direction, the circumferential direction, or the radial direction of the pin portion. Examples of the clearance provided between the output shaft and the pin portion include:
(A) a clearance in the axial direction only;
(B) a clearance in the circumferential direction only;
(C) a clearance in the radial direction only;
(D) a combination of a clearance in the axial direction and a clearance in the circumferential direction;
(E) a combination of a clearance in the axial direction and a clearance in the radial direction;
(F) a combination of a clearance in the circumferential direction and a clearance in the radial direction; and
(G) a combination of a clearance in the circumferential direction, a clearance in the axial direction, and a clearance in the radial direction.

In a case of (A), the pin portion is capable of vibrating at least in the axial direction.

In a case of (B), the pin portion is capable of vibrating at least in the circumferential direction.

In a case of (C), the pin portion is capable of vibrating at least in the radial direction.

In a case of (D), the pin portion is capable of vibrating at least in the axial direction and the circumferential direction.

In a case of (E), the pin portion is capable of vibrating at least in the axial direction and the radial direction.

In a case of (F), the pin portion is capable of vibrating at least in the circumferential direction and the radial direction.

In a case of (G), the pin portion is capable of vibrating in the axial direction, the circumferential direction, and the radial direction.

Although the amount of the clearance in any one of the directions is not particularly limited and varies depending on the size of the welding apparatus or the like, the amount is preferably 0.0001mm to 1mm, more preferably 0.001 mm to 0.8 mm, and further preferably 0.01mm to 0.5mm, for example.

(6) The manufacturing method according to any one of (1) to (5), wherein
the fillet welding step is a step of performing fillet welding by synchronized stir welding without using an auxiliary tool, the auxiliary tool being configured not to rotate together with the pin portion and to apply pressure to a plastic flow portion generated by synchronized stir welding in the two welding object members at an inner corner.

According to the manufacturing method of (6), since an auxiliary tool is not used, the occurrence of galling can be suppressed. Synchronized stir welding can be swiftly performed. The welding speed can be increased. An increase in the welding temperature can be suppressed. The welding conditions are less likely to be constrained. It is possible to perform fillet welding stably while suppressing roughness and turbulence of the plastic flow portion, simply and swiftly.

(7) The manufacturing method according to any one of (1) to (6), wherein
an enlarged-diameter portion is provided on a proximal end of the pin portion so as to extend from the proximal end of the pin portion, and the enlarged-diameter portion is configured to satisfy at least one of the following two requirements: (i) a diameter thereof is larger than a diameter of the pin portion; and (ii) the diameter thereof increases toward its proximal end, and
the fillet welding step is a step of inserting the rotating pin portion into the two welding object members at an inner corner of an angle formed by the two welding object members, thereby performing fillet welding by synchronized stir welding, to satisfy either of the following further requirements: (iii) a plastic flow portion generated by synchronized stir welding in the two welding object members at the inner corner and a side surface of the enlarged-diameter portion do not make line-contact with each other; or (iv) the plastic flow portion and the enlarged-diameter portion do make line-contact with each other in a state in which both circumferential sides of a line-contact position between the plastic flow portion and the enlarged-diameter portion are spatially open.

In (iii), since the plastic flow portion and a side surface of the enlarged-diameter portion do not make line contact, an environmentally open space is created between them. In (iv) as well, by both sides of a line-contact position being spatially open, an open space is created between them. Under such an environment, proper fillet welding cannot be performed with friction stir welding. Therefore, in PTL 1 to 5, an auxiliary tool is used, and friction stir welding is performed in an environmentally closed state. As a result, many problems are caused by the auxiliary tool. On the other hand, according to the manufacturing method of (7), since fillet welding is performed by synchronized stir welding, even in either case of (iii) or (iv) in which an environmentally open space is present, fillet welding can be performed stably while more effectively suppressing roughness and turbulence of the plastic flow portion. As a result, high-quality fillet welding having a good external appearance and suppressed defects can be achieved. (iii) enables fillet welding having a better external appearance and higher quality than (iv). (iv) can perform fillet welding having a good external appearance and suppressed defects even when vibration occurs in the welding object members, as compared to (iii). In other words, higher stability can be achieved.

The enlarged-diameter portion is provided so as to continue from a proximal end of the pin portion; however, when a diameter of the enlarged-diameter portion is larger than a diameter of the pin portion at a portion where the enlarged-diameter portion and the pin portion continue from each other, a step is formed at the portion where the enlarged-diameter portion and the pin portion continue from each other. A distal end surface of the enlarged-diameter portion at the step corresponds to a shoulder. As mentioned above, it is preferable that either (iii) or (iv) is satisfied, but the shoulder (distal end surface of the enlarged-diameter portion) may or may not be in contact with the plastic flow portion. Since synchronized stir welding can suppress the discharge pressure of a plastic flow component during fillet welding, the size of the shoulder (the distal end surface of the enlarged-diameter portion) can be reduced. For example, a ratio of a diameter of the shoulder (a distal end surface of the enlarged-diameter portion) to a diameter of the pin portion at a proximal end may be 1.8 or less. In other words, the shoulder may be formed to be small enough to satisfy the ratio, or may not be formed. The area of the shoulder that contacts the plastic flow portion decreases. A phenomenon in which the plastic flow is hindered by the shoulder does not easily occur. It is possible to perform synchronized stir welding at a lower temperature. Synchronized stir welding at a low temperature can suppress an influence of the temperature on the welding object member. Accordingly, generation of a deformation or a stress due to heat can be suppressed, and thus mechanical properties of the welding object member may possibly be improved. Furthermore, the lowering of the temperature at which the synchronized stir welding is performed can suppress the energy consumption. This also makes it possible that a material that is difficult to weld at a high temperature is adopted as the welding object member.

The ratio is preferably 1.8 or less, more preferably 1.5 or less, further preferably 1.3 or less, and especially preferably 1.1 or less. This is because occurrence of the phenomenon in which the plastic flow is hindered by the shoulder can be suppressed. If the above ratio is 1.0, it means that a shoulder is not formed. An aspect without a shoulder is also one of the preferred embodiments of the rotating member for synchronized stirring. The ratio may be less than 2.0, for example. The ratio may be 2 or more. It may be acceptable to adopt a fixed shoulder that does not rotate together with the pin portion as the shoulder; however, the fixed shoulder corresponds to the auxiliary tool mentioned above. According to synchronized stir welding, fillet welding can be suitably performed without the use of auxiliary tools.

(8) The manufacturing method according to (7), wherein
the enlarged-diameter portion is configured to satisfy at least the requirement of (ii);
a taper angle of the enlarged-diameter portion has an angle equal to or less than an angle of a corner formed by the two welding object members;
the fillet welding step is a step of inserting the pin portion into the two welding object members at an inner corner of an angle formed by the two welding object members while the pin portion rotates, thereby performing fillet welding by synchronized stir welding, so that the plastic flow portion generated by synchronized stir welding in the two welding object members at the inner corner and a side surface of the enlarged-diameter portion do not make contact with each other.

According to the manufacturing method of (8), it is possible to perform fillet welding stably while further effectively suppressing roughness and turbulence of the plastic flow portion.

(9) The manufacturing method according to any one of (1) to (8), wherein
the fillet welding step inserts the pin portion into the two welding object members at an inner corner of an angle formed by the two welding object members while the pin portion rotates, and moves the pin portion along the inner corner, thereby performing fillet welding by synchronized stir welding.

According to the manufacturing method of (9), it is possible to stably expand excellent fillet welding by synchronized stir welding as described above.

(10) The manufacturing method according to any one of (1) to (9), wherein
the manufacturing method further comprises an arrangement step of arranging the two welding object members before the fillet welding step, to allow the two welding object members to form an angle and to enable, in the fillet welding step, insertion of the pin portion into the two welding object members at an inner corner of the angle.

According to the manufacturing method of (10), the arrangement step of arranging two welding object members so as to satisfy the following requirements (I) and (II) is performed before the fillet welding step.
(I) The two welding object members form the angle.
(II) In the fillet welding step, insertion of the pin portion into the two welding object members at the inner corner of the angle is enabled. This allows the excellent fillet welding by synchronized stir welding as described above to proceed smoothly.

(11) A synchronized stir welding apparatus for fillet welding, wherein
the synchronized stir welding apparatus includes:
an output shaft;
a driving mechanism configured to rotate the output shaft;
a pin portion provided on a distal end of the output shaft, configured to be rotationally driven by rotation transmitted from the driving mechanism, and to be inserted into the welding object members during synchronized stirring;
a holding mechanism that holds the two welding object members;
a moving mechanism that changes a relative position between the pin portion and the two welding object members,
wherein the pin portion is configured such that there exists, between the output shaft and the pin portion, a clearance that allows vibration of the pin portion with respect to the output shaft, the clearance being a void or substantially a void, and due to the clearance, the pin portion being free or substantially free with respect to the output shaft within a range of the clearance, and
the moving mechanism is configured to relatively insert the rotating pin portion into the two welding object members at an inner corner of an angle formed by the two welding object members, thereby performing fillet welding by synchronized stir welding.

According to the synchronized stir welding apparatus of (11), fillet welding is performed by synchronized stir welding by utilizing a low discharge pressure of a plastic flow component as described above. As a result, according to the synchronized stir welding apparatus of (11), it is possible to perform fillet welding stably while suppressing roughness and turbulence of the plastic flow portion, without requiring an auxiliary tool, being less susceptible to constraints of welding conditions, and allowing the fillet welding to be carried out simply and swiftly.

(12) The synchronized stir welding apparatus according to (11), further comprising
a rotating member for synchronized stirring provided on the output shaft and including the pin portion, wherein
the rotating member for synchronized stirring is configured, in a state of being provided on the output shaft, to create a clearance between the output shaft and the pin portion, the clearance allowing vibration of the pin portion relative to the output shaft.

According to the synchronized stir welding apparatus of (12), similarly to (11), it is possible to perform fillet welding stably while suppressing roughness and turbulence of the plastic flow portion, without requiring an auxiliary tool, being less susceptible to constraints of welding conditions, and allowing the fillet welding to be carried out simply and swiftly.

(13) The synchronized stir welding apparatus according to (11) or (12), such that
the pin portion is configured such that, due to the clearance, during synchronized stirring, a vibration of the pin portion has a larger amplitude and/or a higher frequency than a vibration of the output shaft.

According to the synchronized stir welding apparatus of (13), since a discharge pressure of a plastic flow component due to synchronized stir welding can be kept low, fillet welding can be performed stably while suppressing roughness and turbulence of a plastic flow portion, without requiring an auxiliary tool, being less susceptible to constraints of welding conditions, and being carried out simply and swiftly.

(14) The synchronized stir welding apparatus according to any one of (11) to (13), wherein
the pin portion is configured such that a vibration of the pin portion is passively generated by contact with plastic flow components of the two welding object members within a range of the clearance.

According to the synchronized stir welding apparatus of (14), since a discharge pressure of a plastic flow component due to synchronized stir welding can be kept low, fillet welding can be performed stably while suppressing roughness and turbulence of a plastic flow portion, without requiring an auxiliary tool, being less susceptible to constraints of welding conditions, and being carried out simply and swiftly.

(15) The synchronized stir welding apparatus according to any one of (11) to (14), such that
the pin portion is configured such that, due to the clearance, a vibration of the pin portion is generated in at least one of an axial direction, a circumferential direction, and a radial direction of the pin portion.

According to the synchronized stir welding apparatus of (15), since a discharge pressure of a plastic flow component due to synchronized stir welding can be kept low, fillet welding can be performed stably while suppressing roughness and turbulence of a plastic flow portion, without requiring an auxiliary tool, being less susceptible to constraints of welding conditions, and being carried out simply and swiftly.

(16) The synchronized stir welding apparatus according to any one of (11) to (15), wherein
the synchronized stir welding apparatus operates without use of an auxiliary tool,
the auxiliary tool being configured not to rotate together with the pin portion and to a plastic flow portion generated by synchronized stir welding in the two welding object members at an inner corner.

According to the synchronized stir welding apparatus of (16), since an auxiliary tool is not used, the occurrence of galling can be suppressed. Synchronized stir welding can be swiftly performed. The welding speed can be increased. An increase in the welding temperature can be suppressed. The welding conditions are less likely to be constrained. It is possible to perform fillet welding stably while suppressing roughness and turbulence of the plastic flow portion, simply and swiftly.

(17) The synchronized stir welding apparatus according to any one of (11) to (16), such that
an enlarged-diameter portion is provided on a proximal end of the pin portion so as to extend from the proximal end of the pin portion, and the enlarged-diameter portion is configured to satisfy at least one of the following two requirements: (i) a diameter thereof is larger than a diameter of the pin portion; and (ii) the diameter thereof increases toward its proximal end, and
the moving mechanism is configured to insert the rotating pin portion into the two welding object members at an inner corner of an angle formed by the two welding object members, thereby performing fillet welding by synchronized stir welding, to satisfy either of the following further requirements: (iii) a plastic flow portion generated by synchronized stir welding in the two welding object members at the inner corner and a side surface of the enlarged-diameter portion do not make line-contact with each other; or (iv) the plastic flow portion and the enlarged-diameter portion do make line-contact with each other in a state in which both circumferential sides of a line-contact position between the plastic flow portion and the enlarged-diameter portion are spatially open.

According to the synchronized stir welding apparatus of (17), since fillet welding is performed by synchronized stir welding, even in either case of (iii) or (iv) in which an environmentally open space is present, fillet welding can be performed stably while more effectively suppressing roughness and turbulence of the plastic flow portion. As a result, high-quality fillet welding having a good external appearance and suppressed defects can be achieved. (iii) enables fillet welding having a better external appearance and higher quality than (iv). (iv) can perform fillet welding having a good external appearance and suppressed defects even when vibration occurs in the welding object members, as compared to (iii). In other words, higher stability can be achieved.

(18) The synchronized stir welding apparatus according to (17), wherein
the enlarged-diameter portion is configured to satisfy at least the requirement of (ii);
a taper angle of the enlarged-diameter portion has an angle equal to or less than an angle of a corner formed by the two welding object members; and
the moving mechanism is configured to insert the pin portion into the two welding object members at an inner corner of an angle formed by the two welding object members while the pin portion rotates, thereby performing fillet welding by synchronized stir welding, so that the plastic flow portion generated by synchronized stir welding in the two welding object members at the inner corner and a side surface of the enlarged-diameter portion do not make contact with each other.

According to the synchronized stir welding apparatus of (18), it is possible to perform fillet welding stably while further effectively suppressing roughness and turbulence of the plastic flow portion.

(19) The synchronized stir welding apparatus according to any one of (11) to (18), wherein
the moving mechanism is configured to insert the rotating pin portion into the two welding object members at an inner corner of an angle formed by the two welding object members, and to move the pin portion along the inner corner, thereby performing fillet welding by synchronized stir welding.

According to the synchronized stir welding apparatus of (19), it is possible to stably expand excellent fillet welding by synchronized stir welding as described above.

(20) The synchronized stir welding apparatus according to any one of (11) to (19), wherein
the holding mechanism is configured to arrange and hold the two welding object members to allow the two welding object members to form an angle and to enable the moving mechanism to insert the pin portion into the two welding object members at an inner corner of the angle.

According to the synchronized stir welding apparatus of (20), it is possible to smoothly progress excellent fillet welding by synchronized stir welding as described above.

(21) A fillet-welded component manufactured by synchronized stir welding by the manufacturing method according to any one of (1) to (10) or by the synchronized stir welding apparatus according to any one of (11) to (20).

The component according to (21), which is manufactured by high-strength and high-quality fillet welding, can be suitably used in various applications.

(22) A fillet-welded component manufactured by synchronized stir welding according to (21), wherein

The fillet-welded component by synchronized stir welding is applied to any one of an automobile, a railway vehicle, an aircraft, a ship, and a rocket.

The component according to (22), which is manufactured by high-strength and high-quality fillet welding, can be particularly suitably used in severe environments.

(23) A fillet-welded component manufactured by synchronized stir welding according to (21), wherein
the fillet-welded component manufactured by synchronized stir welding is applied to any one of an electrode component, an air conditioning device, a water-cooled or air-cooled power control unit, a water-cooled or air-cooled battery case, a door panel, a shock absorber, a suspension link, a waveguide, an antenna, a motor cover, a brewing tank, a vacuum device component, a sputtering target material, and an embedded heater.

The component according to (23), which is manufactured by high-strength and high-quality fillet welding, can be particularly suitably used in severe environments.

(24) A fillet-welded component manufactured by synchronized stir welding according to any one of (21) to (23), wherein
the fillet-welded component manufactured by synchronized stir welding is:
a component manufactured by fillet welding through synchronized stir welding of the two welding object members having different thicknesses, or
a component manufactured by fillet welding through synchronized stir welding of the two welding object members made of different materials.

According to the above-described excellent fillet welding by synchronized stir welding, the occurrence of welding defects is suppressed, and high-strength welding is possible. Therefore, high-quality fillet welding can be performed on a plurality of plate materials having different thicknesses and on heterogeneous materials. The welded component obtained is manufactured through high-strength and high-quality fillet welding. Heterogeneous materials may be the following combinations. For example, the heterogeneous material may be a combination of different metals, a combination of a resin and a metal, a combination of a metal casting and a metal wrought material, or a combination of a ceramic and a metal. Further, of the heterogeneous materials, at least one of the materials may be the following material. For example, the material may be a copper-aluminum heterogeneous thin-film material, a Ti-based material, an iron-based material, a chromium-based material, and rare-metal bonding. The rare metal herein may or may not encompass Ag and Au.

Further, in the present teaching, the following configurations can be adopted. Note that the following configuration is inherently or implicitly encompassed by the present teaching, but is described below for confirmation.

(22-1) The welded component according to (21) that is applied to a spacecraft, a special vehicle, a bicycle, a defense special vehicle, defense equipment, a linear motor, a linear motor car, and a drone. Examples of the aforementioned spacecraft include artificial satellites, space stations, manned spacecraft, space probes, space telescopes, space cargo ships, space shuttles, and interplanetary probes. Example of the aforementioned special vehicle includes a self-propelled construction machine such as a truck crane, a trailer-coupled vehicle, and the like. Examples of the aforementioned bicycles include a city bicycle, an electric assist bicycle, a sports bike, and a special bicycle for off-road use and competition. With the welded component according to (21), since occurrence of welding defects is suppressed and high-strength welding is achieved, the welded component of (21) may be suitably used in severe environments as indicated in (22-1).

(22-2) The welded component according to (21) that is applied to facilities, apparatuses, or equipment used in the following fields. Namely, the welded component is applied to fields of food and beverages, liquid crystal, electronics, semiconductors, energy, power generation, batteries, solar cells, infrastructure, architecture, construction, medical care, vacuum, materials, equipment, machinery, metal and resin molding, home appliances, communications, IT, and digital. With the welded component according to (21), since occurrence of welding defects is suppressed and high-strength welding is achieved, the welded component according to (21) may be suitably used in a broad range of fields including fields such as those indicated in (22-2).

(23-1) The welded component according to (21) that is applied to any one of the following or configured as any one of the following. Aluminum and aluminum alloy products, copper and copper alloy products, magnesium and magnesium alloy products, iron and iron alloy products, resin products, extruded materials, drawn materials, cast materials, forged materials, thermal spray and injection materials, molded materials, metal products, heterogeneous material welded products, thin film materials, bus bars, silver and silver alloy products, gold and gold alloy products, and titanium and titanium alloy products.

(23-2) The welded component according to (21) that is applied to any one of the following. Chambers, vacuum chambers, backing plates, water-cooling plates, temperature control plates, heat sinks, nozzles, valves, susceptors, ion implanter equipment, mobile phones, smartphones, chargers, storage batteries, Wi-Fi devices, electrical appliances, household products, televisions, games, washing machines, refrigerators, clocks, digital watches, decorative members, accessories, tableware, kitchen knives, scissors, balls, glasses, bats, electronic devices, and cameras.

(23-3) The welded component according to (21) that is applied to any one of the following. Inverter cases, frames, bodies, undercarriage members, doors, door panels, floor panels, ceiling panels, inner panels, outer panels, stack boxes, crank arms, waveguide, antennas, motors, gears, mufflers, electrical components, oil pans, motor covers, honeycomb panels, double-skin panels, tailored materials, body panels, wing members, bridges, bridge girders, bridge structures, wheelchairs, turbines, blades, converters, battery pack housings, wheels, accelerators, brakes, drive shafts, bumpers, bumper beams, spoilers, crash boxes, saddles, crankcases, bonnet hoods, radomes, clad materials, battery coil materials, rollers, bearings, bearing members, beam guides, and heat shields.

(23-4) The welded component according to (21) that is applied to any one of the following. Gas tanks, gas power generators, fuel tanks, brewing tanks, hydrogen tanks, gasoline tanks, nuclear containers, solvent tanks, sonar devices, thermal power generators, hydroelectric generators, wind power generators, nuclear power generators, ion implantation devices, film forming devices, etching devices, coating devices, agricultural machinery, construction machinery, machine tools, industrial machinery, pumps and compressors, textile machinery, office machinery, superconducting devices, neutron devices, and exposure devices.

(23-5) The welded component according to (21) that is applied to any one of the following. Syringes, catheters, medical devices, mounting stands, jigs, blades, scaffolding, window sashes, exterior walls, interior walls, roofs, interior finishes, piping, chairs, tables, desks, beds, sofas, and cabinets.

(23-6) The welded component according to (21) that is applied to any one of the following. Capacitors, dryers, fishing gear (reels), musical instruments, microwave ovens, air conditioners, fans, personal computers, forklifts, tractors, excavators, bulldozers, robot arms, flanges, crawler tracks, hydraulic cylinders, pressing machines, suspensions, pedals, handlebars, guardrails, pipelines, engine blocks, transmissions, pantographs, fences, handrails, landing gears, railway rails, signal devices, electronic display boards, level crossings, propeller shafts, ducts, ventilation fans, suitcases, attaché cases, stepladders, inductors, aluminum trays, bathtubs, support frames, cooling layers, distributors, synthesizers, onboard lead wires, robot arms, mechanical arms, housings, capsules, valves, detectors, and missiles.

In the present teaching, the following aspects may be adopted regarding "clearance". Note that the following aspect is inherently or implicitly encompassed by the present teaching, but is described below for confirmation.

In the embodiments described later and the description above, the clearance is (I) provided by using a member such as a key; however, the clearance may be (II) provided by a fitting shape, or (III) a combination of the forms in (I) and (II). In the following, between the output shaft and the pin portion, a member A on the output shaft side and a member B on the pin portion side are adjacent to each other, and a clearance is provided between the member A and the member B. Note that the members A and B are not particularly limited. Further, the configuration from the output shaft to the pin is not particularly limited, and the configuration may be the output shaft-the holder-the collet-the tool-the pin, the output shaft-the holder-the tool-the pin, or the output shaft-the collet-the tool-the pin. The tool and the pin may be integrated with each other. The collet and the holder may be integrated with each other. The following examples are applicable to any of these aspects.
(I) Clearance provided by coupling members such as a key.
   In this case, the coupling member is provided between the members A and B. The members A and B may be positioned at any of the upstream side (e.g., the output shaft and the holder), the intermediate portion (e.g., the holder and the tool), or the downstream side (e.g., the tool and the pin). The members such as the holder, the collet, and the tool may be divided between the output shaft side and the pin portion side, and a coupling member may be provided between these members, whereby a clearance is formed. Further, a key is used as the coupling member in the embodiments described below and in the description above; however, a pin or a bolt may be used. The key is provided between a member on the inner diameter side and a member on the outer diameter side along an axial direction of the output shaft. That is, a key groove is formed in each of the members on the inner diameter side and the outer diameter side, and a key having a size smaller than the key groove is provided in the key grooves, whereby a clearance can be formed. The key is not particularly limited, and examples of the key include a parallel key having a quadrangular (rectangular or square) cross-sectional shape, a wedge key (triangular key) provided with a taper such that one side becomes thinner in a radial direction, a semi-circular key having a semi-circular cross section, a round key having a cylindrical cross-sectional shape, an oval key, a polygonal key having a pentagonal or higher polygonal shape, a diamond-shaped key, and other irregular keys (e.g., a T-shaped key and a fan-shaped key). The shape along the axial direction is not particularly limited, and examples include a straight-type key having a constant cross-sectional shape along the axial direction, a step-type key in which the size of the cross-sectional shape varies stepwise along the axial direction, and a taper-type key in which the size of the cross-sectional shape gradually varies along the axial direction. Further, instead of the key or in combination with the key, a spherical body may be used as a coupling member. A plurality of spherical bodies may be arranged in a form in which the spherical bodies are aligned in the key grooves (ball spline). The dimensional difference between the key and the key groove is provided in at least one of the radial direction, the circumferential direction, or the axial direction. This creates a clearance that allows for vibration of the pin portion in that direction. A pin or a bolt is provided so as to be inserted through both the member on the inner diameter side and the member on the outer diameter side along the radial direction of the output shaft. For example, a hole having a diameter larger than that of the pin or the bolt is formed in one of the members on the outer diameter side and the inner diameter side, and the pin or the bolt is erected along the radial direction of the output shaft so as to pass through the hole, whereby a clearance may be formed. The dimensional difference between the pin or bolt and the hole is provided in at least one of the radial direction, the circumferential direction, or the axial direction. This creates a clearance that allows for vibration of the pin portion in that direction.
(II) Clearance provided by a fitting shape (spline)
   In this case, the fitting may be positioned at any of the upstream side, the intermediate portion, and the downstream side, as in the case of the above (I). The members such as the holder, the collet, and the tool may be divided between the output shaft side and the pin portion side, and a fitting may be formed on these members, whereby a clearance may be formed. The spline may be provided over the entire circumferential direction or in a portion of the circumferential direction. The spline shape is not particularly limited, and examples include polygonal splines (polygonal grooves), round splines (round grooves), angular splines (V-grooves), sawtooth splines, involute splines, and involute serrations. The dimensional difference of these fittings is provided in at least one of the radial direction, the circumferential direction, or the axial direction. This creates a clearance that allows for vibration of the pin portion in that direction.
(III) Clearance by a combination of the above (I) and (II)
   A clearance may be formed by a combination of the coupling member and the fitting. The clearance may be formed by a combination of the upstream side, the intermediate portion, and the downstream side. Further, by a combination of these, a clearance may be formed. The clearance may be provided in a plurality of positions.

### Advantageous Effects of Invention

According to the present teaching, it is possible to perform fillet welding stably while suppressing roughness and turbulence of the plastic flow portion, without requiring an auxiliary tool, being less susceptible to constraints of welding conditions, and allowing the fillet welding to be carried out simply and swiftly.

### Brief Description of Drawings

**[****FIG. 1]** FIG. 1(a) to FIG. 1(c) are each cross-sectional view schematically showing a manufacturing method according to an embodiment, FIG. 1(d) to FIG. 1(j) are each cross-sectional view schematically showing an arrangement of two welding object members according to the embodiment, and FIG. 1(k)~FIG. 1(p) are each side view schematically showing a pin portion according to the embodiment.
**[****FIG. 2]** FIG. 2(a) is a cross-sectional view schematically showing a rotating member for synchronized stirring according to First Embodiment, and FIG. 2(b) is a cross-sectional view as taken along the line A-A.
**[****FIG. 3]** FIG. 3(a) to FIG. 3(t) are cross-sectional views each schematically showing a rotating member for synchronized stirring according to its modification.
**[****FIG. 4]** FIG. 4(a) is a cross-sectional view schematically showing a rotating member for synchronized stirring according to Second Embodiment, and FIG. 4(b) is a perspective view schematically showing a rotating member for synchronized stirring according to its modification.
**[****FIG. 5]** FIG. 5(a) is a cross-sectional view schematically showing a rotating member for synchronized stirring according to Third Embodiment, and FIG. 5(b) and FIG. 5(c) are perspective views schematically showing a rotating member for synchronized stirring according to its modification.

### Description of Embodiments

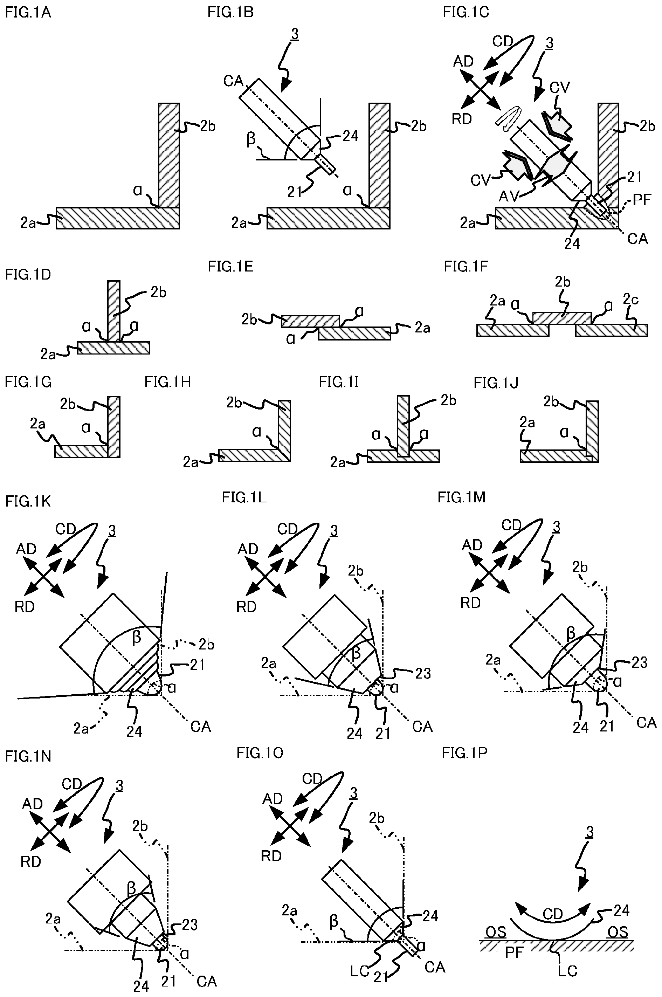

FIG. 1(a) TO FIG. 1(c) ARE EACH A CROSS-SECTIONAL VIEW ILLUSTRATING A FILLET WELDING STEP INCLUDED IN A MANUFACTURING METHOD ACCORDING TO THE PRESENT EMBODIMENT. AD, CD, RD in FIG. 1(c) are the axial direction, the circumferential direction, and the radial direction, respectively. These directions are common in FIG. 1(a) to FIG. 1(c).

The fillet welding step is a step of fillet welding two welding object members 2a and 2b, targeting the two welding object members 2a and 2b that are arranged to form angle α (FIG. 1(a)). The welding object members 2a and 2b are plate-like members. However, the welding object members 2a and 2b are not limited to the plate-like members. The angle α is typically a right angle or substantially right angle. Here, "substantially" means that shape errors of the welding object members and errors occurring when the welding object members are placed are tolerated. The angle α is not particularly limited, provided that it is less than 180°. The angle α is preferably 45° or more and 135° or less, more preferably 60° or more and 120° less, and further preferably 75° or more and 105° or less.

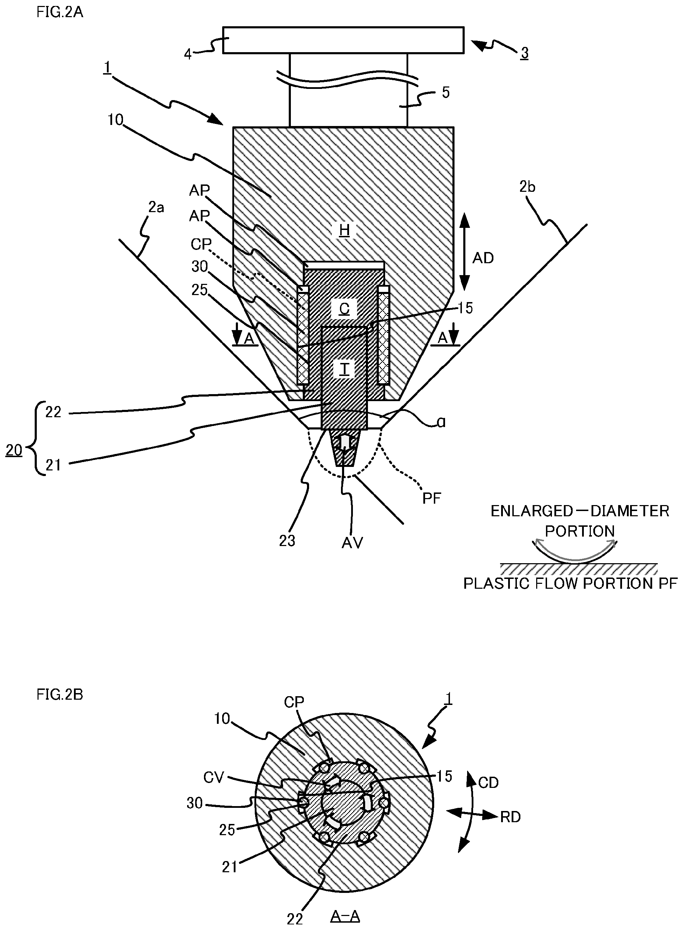

The fillet welding step is implemented by a synchronized stir welding apparatus. The synchronized stir welding apparatus 3 includes an output shaft 5, a driving mechanism 4, and a pin portion 21, as shown in FIG. 2 to FIG. 5. The driving mechanism 4 is configured to rotate the output shaft 5. The pin portion 21 is arranged at the distal end of the output shaft 5. The pin portion 21 is inserted into the two welding object members 2a and 2b during synchronized stirring. The pin portion 21 is provided such that there are the clearances AP, CP between the output shaft 5 and the pin portion 21, the clearances AP, CP allowing the vibrations of the pin portion 21 relative to the output shaft 5. The clearances AP and CP are void, or substantially void. With the clearances AP and CP, the pin portion 21 is configured to be free or substantially free relative to the output shaft 5 within a range of the clearances AP and CP. The pin portion 21 is configured to be rotated by rotation transmitted from the driving mechanism 4. In FIG. 1(b), the pin portion 21 is depicted, but the output shaft 5 and the driving mechanism 4 are not shown, nor are the clearances AP and CP. The pin portion 21 is directed towards the inner corner of the angle α (the contact position of the two welding object members 2a and 2b), as shown in FIG. 1(b).

An enlarged-diameter portion 24 is provided on the proximal end of the pin portion 21 so as to continue from the pin portion 21. The enlarged-diameter portion 24 is configured to satisfy a requirement (ii) out of the two requirements: (i) a diameter thereof is larger than a diameter of the pin portion 21; and (ii) the diameter thereof increases toward the proximal end. The taper angle β of the enlarged-diameter portion 24 is 90° and is the same as angle α (see FIG. 1(b)).

In the fillet welding step, the pin portion 21, which rotates in the circumferential direction CD around the axis CA, is inserted into the two welding object members 2a and 2b at the inner corner of the angle α formed by the two welding object members 2a and 2b, thereby performing fillet welding by synchronized stir welding (FIG. 1(c)).

As shown in FIG. 1(c), the pin portion 21 is inserted into a plastic flow portion PF. The side surface of the enlarged-diameter portion 24 is not in contact with the plastic flow portion PF. The side surface of the enlarged-diameter portion 24 does not contact either of the welding object members 2a or 2b. As shown in FIG. 2 to FIG. 5, the pin portion 21 is configured such that there are clearances between the output shaft 5 and the pin portion 21, which allow the vibrations AV, CV of the pin portion 21 relative to the output shaft 5. The vibrations AV, CV of the pin portion 21 have a larger amplitude and/or a higher frequency than those of the output shaft 5. The enlarged-diameter portion 24 may be configured not to contact the plastic flow portion PF under a condition in which the vibrations AV and CV of the pin portion 21 do not occur, and may be configured not to make contact with the welding object members 2a and 2b. The enlarged-diameter portion 24 may be configured not to make contact with the plastic flow portion PF under a condition in which the vibrations AV and CV of the pin portion 21 do not occur, and may be configured not to make contact with the welding object members 2a and 2b. By moving the pin portion 21 in the direction along the inner corner of the angle α, as shown in FIG. 1(c) (the front-back direction of FIG. 1(c)), fillet welding can be progressed. Since this fillet welding is performed by synchronized stir welding, it is possible to perform fillet welding stably while suppressing roughness and turbulence of the plastic flow portion, without requiring an auxiliary tool, being less susceptible to constraints of welding conditions, and allowing the fillet welding to be carried out simply and swiftly.

In the example shown in FIG. 1(a) to FIG. 1(c), the two welding object members 2a and 2b are arranged to form a corner joint. However, the arrangement of the two welding object members 2a and 2b is not particularly limited. Examples include a T-shaped joint (FIG. 1(d)) and a lap joint (Fig. 1(e)). Further, a press plate joint (Fig. 1 (f)) can also be adopted. Further, the corner joint is not limited to an arrangement in which the two welding object members 2a and 2b are in contact in a vertical direction, as shown in FIG. 1(a) to FIG. 1(c); for example, as shown in FIG. 1(g), the two welding object members 2a and 2b may be in contact in a horizontal direction. Further, as shown in FIGS. 1(h), 1(i), and 1(j), an aspect in which an abutting portion of the two welding object members 2a and 2b is machined and fillet welding is performed at the abutting portion also falls within the fillet welding step of the present teaching. The shape of machining the abutting portion is not limited to the shape shown in FIG. 1(h), FIG. 1(i), and FIG. 1(j). In the press plate joint, fillet welding is performed on the two welding object members 2a and 2b through synchronized stir welding, and fillet welding is also performed on the two welding object members 2b and 2c through synchronized stir welding. As described, by combining fillet welding of two welding object members through synchronized stir welding, a member in which three or more welding object members are fillet welded through synchronized stir welding can be manufactured. Similarly, T-shaped joints as shown in FIG. 1(d) may be combined to form a cross joint. The fillet welding step is typically performed to two welding object members; however, the fillet welding step may be performed to three or more welding object members. Even when fillet welding is performed on three or more welding object members through synchronized stir welding, the step includes fillet welding targeting two welding object members through synchronized stir welding, and therefore the step falls within the fillet welding step.

The manufacturing method according to this embodiment may further include an arrangement step of arranging two welding object members 2A AND 2b in addition to the fillet welding step. In the arrangement step, the two welding object members 2a and 2b are arranged to form the angle α, so as to enable the insertion of the pin portion 21 into the two welding object members 2a and 2b at the inner corner of the angle α in the fillet welding step (see Fig. 1(a)). The manufacturing method according to this embodiment may further include other steps.

In the example shown in FIG. 1(a) to FIG. 1(f), a plate member is used as the welding object member. The welding object member is typically a plate-like member. However, the profile of the welding object member is not limited to this example. From the perspective of the profile, the welding object members include, for example, a tubular member, a rod-like member, a shaped member having a specific cross-sectional shape such as an H-shape, I-shape, or L-shape, a polygonal member such as a cube or a rectangular prism, and a tapered member having a tapered shape. The plate-like member is not limited to a flat plate-like member. Examples include plate-like members such as curved plate-like members, corrugated plate-like members, perforated plate-like members (punching plates), irregular plate-like members (embossed plates), lattice-like plate members (gratings), composite plate-like members, tapered plate-like members having varying thickness, and ribbed plate-like members. The tubular member and the rod-like member are not limited to straight shapes, but may also be curved. Further, the welding object member may be a hollow member or a solid member.

The shape of the pin portion 21 is not limited to the shapes shown in FIG. 1(b) to FIG. 1(c). For example, the shapes shown in FIG. 1(k) to FIG. 1(n) can be adopted.

In the synchronized stir welding apparatus 3 shown in FIG. 1(k), a multiple-stepped enlarged-diameter portion 24 is provided on the proximal end of the pin portion 21. The multiple-stepped enlarged-diameter portion 24 is configured such that the enlarged-diameter portion 24 closer to the proximal end has a larger diameter than the enlarged portion 24 on the distal end. Further, each enlarged-diameter portion 24 is configured such that its diameter increases toward the proximal end. The taper angle β is larger than the angle α, but the enlarged-diameter portion 24 is configured so as not to contact the two welding object members 2a and 2b during synchronized stirring.

In the synchronized stir welding apparatus 3 shown in FIG. 1(l), an enlarged-diameter portion 24 is provided on the proximal end of the pin portion 21. The enlarged-diameter portion 24 is configured such that its diameter increases toward the proximal end, but it does not have the steps shown in FIG. 1(k). The taper angle β is smaller than the angle α, and the enlarged-diameter portion 24 is configured so that its side surface does not make surface-contact with the two welding object members 2a and 2b during synchronized stirring. Note that, the welding object members 2a and 2b may also be a plastic flow portion. That is, the side surface of the enlarged-diameter portion 24 is configured not to be in surface-contact with the plastic flow portion PF during synchronized stirring. Meanwhile, the pin portion 21 has a shoulder 23. The shoulder 23 is provided so as to be able to contact the plastic flow portion PF. The shoulder 23 is formed such that a ratio of a diameter of the shoulder 23 to a diameter of the pin portion 21 on the proximal end is 1.8 or less.

In the synchronized stir welding apparatus 3 shown in FIG. 1(m), the pin portion 21 is configured to be longer compared to the pin portion 21 of the synchronized stir welding apparatus 3 shown in FIG. 1(l). Further, the enlarged-diameter portion 24 has a taper angle β that is larger than the angle α, but its side surface is configured so as not to make line-contact with the two welding object members 2a and 2b during synchronized stirring.

In the synchronized stir welding apparatus 3 shown in FIG. 1(n), the enlarged-diameter portion 24 is configured to be overall thinner than the synchronized stir welding apparatus 3 shown in FIG. 1(l), and the taper angle β is smaller than the angle α.

In any of the examples shown in FIG. 1(a) to FIG. 1(n), the above-described auxiliary tools are not used. Excellent fillet welding can be performed through synchronized stir welding without an auxiliary tool.

While the above examples fall within the aspect (iii) described above, the present teaching may also adopt examples shown in FIG. 1(o) and FIG. 1(p) as the aspect (iv) described above. In these examples, both sides of a line-contact position LC between the plastic flow portion PF in the circumferential direction CD of the enlarged-diameter portion 24 and a side surface of the enlarged-diameter portion 24 are spatially open, and the plastic flow portion PF and the enlarged-diameter portion 24 are in line contact with each other. In these examples as well, excellent fillet welding can be performed through synchronized stir welding without an auxiliary tool.

In the following, a rotating member 1 for synchronized stirring according to First Embodiment to Third Embodiment will be described with reference to FIG. 2 to FIG. 5. Each rotating member 1 for synchronized stirring shown in FIG. 2 to FIG. 5 can be adopted in a synchronized stir welding apparatus 3, and the synchronized stir welding apparatus 3 can be used in a manufacturing method for a fillet-welded component manufactured by synchronized stirring.

### <First Embodiment>

FIG. 2(a) is a cross-sectional view schematically showing a rotating member 1 for synchronized stirring according to First Embodiment. FIG. 2(b) is a cross-sectional view as taken along the line A-A of FIG. 2(a). In the figures, H, C, and T represent a holder, a collet, and a tool, respectively. AD, CD, and RD represent the axial direction, the circumferential direction, and the radial direction, respectively. The same interpretation applies to the other figures, though the reference signs mentioned above may be omitted in the other figures. In the drawings, if adjacent members of the rotating member 1 for synchronized stirring are given the same hatching pattern, it indicates that those members are in a fixed relationship. If different members are given different hatching patterns, it indicates that those members are in a non-fixed relationship. In the drawings, the same configurations are given the same reference signs.

The rotating member 1 for synchronized stirring is installed in a synchronized stir welding apparatus 3. The synchronized stir welding apparatus 3 is an apparatus for performing fillet welding by synchronized stir welding of the two welding object members 2a and 2b. The synchronized stir welding apparatus 3 has a driving mechanism 4. The rotating member 1 for synchronized stirring is detachably attached to an output shaft 5 of the driving mechanism 4. The rotating member 1 for synchronized stirring rotates with the output shaft 5 so that the rotating member 1 for synchronized stirring does not displace relative to the output shaft 5.

The rotating member 1 for synchronized stirring includes a rotation shaft portion 10, which is made of a metal, and a distal end portion 20, which is made of a metal. The rotation shaft portion 10 corresponds to the holder H. The rotation shaft portion 10 has a substantially columnar shape extending in the axial direction AD. The rotation shaft portion 10 is, at the upper surface side of the rotation shaft portion 10, fixed to the output shaft 5. The rotation shaft portion 10 has, at a lower surface of the rotation shaft portion 10, a bottomed hole for receiving the distal end portion 20. The bottomed hole opens downward. Disposed in the bottomed hole is the distal end portion 20.

The distal end portion 20 has a pin portion 21 and a proximal end portion 22, which is disposed on the proximal end of the pin portion 21. The pin portion 21 corresponds to a tool T. The proximal end portion 22 corresponds to the collet C. The proximal end portion 22 has a substantially columnar shape extending in the axial direction AD. The proximal end portion 22 has, in a lower surface of the proximal end portion 22, a bottomed hole for receiving the pin portion 21. The bottomed hole opens downward. Disposed in the bottomed hole is the pin portion 21. The pin portion 21 is fixed to the proximal end portion 22 so as not to displace relative to the proximal end portion 22. At a time of synchronized stirring, the distal end of the pin portion 21 is inserted into the welding object members 2a and 2b, as shown in FIG. 2(a). In the figures, PF schematically represents a plastic flow portion of the welding object members 2a and 2b at a time of synchronized stirring. The welding object members 2a and 2b are installed on a valley-shaped support base (not shown) so as to have a corner joint arrangement as shown in FIG. 1(a) to FIG. 1(c), and are fixed to the support base by a fixed jig (not shown). As a fixed jig, for example, clamps and other conventionally known jigs may be employed. The support base and the fixed jig are an example of the holding mechanism provided in the synchronized stir welding apparatus 3. As a holding mechanism, conventional holding mechanisms such as L-shaped fixed jig and multi-axis clamps can be employed. The holding mechanism can be either mechanical or hydraulic, and is not specifically limited. Further, the synchronized stir welding apparatus 3 is equipped with a moving mechanism (not shown) that moves the driving mechanism 4, together with the output shaft 5 and the rotating member 1 for synchronized stirring, along the inner corner of the angle α formed by the two welding object members 2a and 2b. This moving mechanism moves the pin portion 21, out of the pin portion 21 and the welding object members 2a and 2b. As the moving mechanism, a conventional mechanism may be employed, such as a gantry mechanism, a robotic arm, a lathe-type mechanism, a CNC machine, a track-type moving mechanism, and a pick-and-place mechanism. Note that, in stead of the pin portion 21 or together with the pin portion 21, the two welding object members 2a and 2b may be moved. Specifically, the moving mechanism may be configured to move the holding mechanism holding the two welding object members 2a and 2b. As such a moving mechanism, a conventional moving mechanism may be employed, such as a linear motion stage, an XY table, a multi-axis positioner, and a rotary table system.

The distal end portion 20 has, on its outer circumferential surface, plural grooves 25 arranged at intervals in the circumferential direction CD, as shown in FIG. 2(b). The grooves 25 are formed so as to extend in the axial direction AD, as shown in FIG. 2(a). Provided in each of the grooves 25 is a rod-shaped fitting key 30, which is made of a metal. An inner portion of the fitting key 30 in the radial direction RD comes into the groove 25. An outer portion of the fitting key 30 in the radial direction RD is exposed to the outside of the groove 25 in the radial direction RD. The rotation shaft portion 10 has, on its inner circumferential surface, grooves 15 arranged at positions corresponding to where the respective fitting keys 30 are exposed. The length of the groove 15 in the circumferential direction CD is larger than the length of the fitting key 30 in the circumferential direction CD. Consequently, a clearance CP in the circumferential direction CD is present in the groove 15. The clearance CP is disposed between the rotation shaft portion 10 and the distal end portion 20. The rotation shaft portion 10 is fixed to the output shaft 5, and the distal end portion 20 includes the pin portion 21. Thus, the clearance CP is disposed between the output shaft 5 and the pin portion 21. The clearance CP is void, or substantially void. Within a range of the clearance CP, the pin portion 21 is free or substantially free relative to the output shaft 5. The distal end portion 20 is configured such that due to the clearance CP, a vibration CV in the circumferential direction CD is produced against the rotation shaft portion 10 at a time of synchronized stirring, as shown in FIG. 2(b). The fitting keys 30...30 function as keys to transmit the rotational power from the driving mechanism to the collet C through the rotation shaft portion 10.

Further in the rotating member 1 for synchronized stirring, a clearance AP in the axial direction AD is present between the rotation shaft portion 10 and the distal end portion 20. In other words, the clearance AP is disposed between the output shaft 5 and the pin portion 21. The clearance AP is void, or substantially void. Within a range of the clearance AP, the pin portion 21 is free or substantially free relative to the output shaft 5. The pin portion 21 is configured such that due to the clearance AP, a vibration AV in the axial direction AD is produced against the output shaft 5 at a time of synchronized stirring, as shown in FIG. 2(a).

In the plastic flow portion PF, therefore, a plastic flow of the welding object members 2a and 2b is generated by rotation of the pin portion 21. The pin portion 21 is in contact with the plastic flow component within the range of the clearances AP, CP. The pin portion 21 is free or substantially free within the range of the clearances AP, CP. Accordingly, passive vibrations AV, CV are imparted to the pin portion 21. Since the vibrations AV, CV of the pin portion 21 are passive, they are not only less likely to hinder the plastic flow of the welding object members 2a and 2b but also capable of synchronization with and thus amplification of the plastic flow.

The pin portion 21 has a shoulder 23 at the height where it makes contact with the plastic flow portion PF. The ratio of a diameter of the shoulder 23 to a diameter of the pin portion 21 located immediately below the shoulder 23 (the pin portion 21, which is adjacent to the shoulder 23, and is closer to the distal end than the shoulder 23) is 1.8 or less. Accordingly, the pin portion 21 has a shoulder 23 whose width is small enough to satisfy the ratio ≤ 1.8.

Since the shoulder 23 of the pin portion 21 has the small width, a phenomenon in which the plastic flow is hindered by the shoulder 23 is less likely to occur. Advantageous effects exerted by the vibrations AV, CV of the pin portion 21 (advantageous effects of the less likelihood of hindrance to the plastic flow, and the capability of amplification of the plastic flow) can be obtained more effectively. Since the width of the shoulder 23 is small, a reduced amount of heat is generated at a time of synchronized stirring, but it is possible to obtain an effective plastic flow thanks to the effects of the vibrations AV, CV of the pin portion 21. Consequently, it is possible to perform synchronized stir welding at a lower temperature. That is, since the width of the shoulder 23 is small, the plastic flow is less likely to be hindered by the shoulder 23, and a more amplified plastic flow can be obtained.

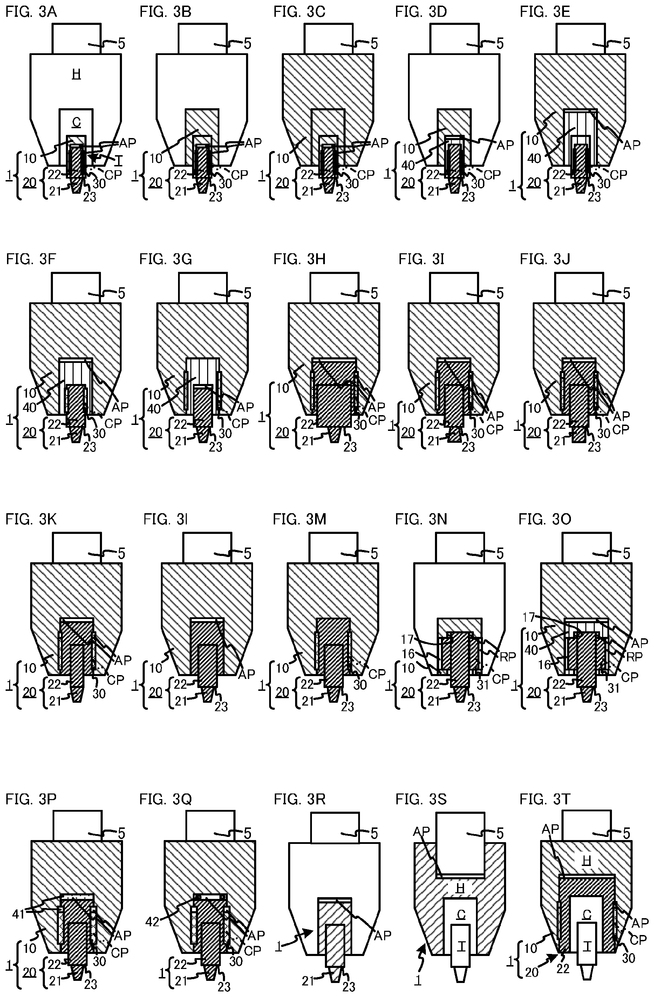

FIG. 3(a) to FIG. 3(t) are cross-sectional views each schematically showing a rotating member 1 for synchronized stirring according to each modification. In FIG. 3(a), FIG. 3(s), and FIG. 3(t), H, C, and T represent a holder, a collet, and a tool, respectively. The same as in FIG. 3(a), FIG. 3(s), and FIG. 3(t) applies to FIG. 3(b) to FIG. 3(r), too, though in FIG. 3(b) to FIG. 3(r), indication of H, C, and T is omitted for convenience.

### [FIG. 3(a)]

The rotating member 1 for synchronized stirring shown in FIG. 3(a), as a whole, corresponds to a tool T; a rotation shaft portion 10 corresponds to a part of the tool T; and a distal end portion 20 corresponds to a part of the tool T.

The distal end portion 20 includes a proximal end portion 22 and a pin portion 21 that are configured integrally. The distal end portion 20 is, by being inserted into a bottomed hole formed at a lower surface of the rotation shaft portion 10, attached to the rotation shaft portion 10. The lower surface of the rotation shaft portion 10 forms a shoulder 23. Disposed between the rotation shaft portion 10 and the distal end portion 20 are fitting keys 30 as shown in FIG. 2(a) and FIG. 2(b). As a result, the rotating member 1 for synchronized stirring has clearances AP, CP provided between the rotation shaft portion 10 and the distal end portion 20. The rotating member 1 for synchronized stirring is attached to a collet C. A holder H and the collet C are fixedly arranged to an output shaft 5, and thus the rotating member 1 for synchronized stirring is arranged to the output shaft 5 via the holder H and the collet C.

### [FIG. 3(b)]

A rotating member 1 for synchronized stirring shown in FIG. 3(b) corresponds to a collet C and a tool T; a rotation shaft portion 10 corresponds to the collet C and a part of the tool T; and a distal end portion 20 corresponds to a part of the tool T. The rotating member 1 for synchronized stirring is arranged on an output shaft 5 via a holder H. Except for this point, the aspect shown in FIG. 3(b) is the same as that in FIG. 3(a).

### [FIG. 3(c)]

A rotating member 1 for synchronized stirring shown in FIG. 3(c) corresponds to a holder H, a collet C, and a tool T; a rotation shaft portion 10 corresponds to the holder H, the collet C, and a part of the tool T; and a distal end portion 20 corresponds to a part of the tool T. The rotating member 1 for synchronized stirring is arranged on an output shaft 5. Except for this point, the aspect shown in FIG. 3(c) is the same as those in FIG. 3(a) and FIG. 3(b).

### [FIG. 3(d)]

A rotating member 1 for synchronized stirring shown in FIG. 3(d) includes a rotation shaft portion 10, an intermediate member 40, and a distal end portion 20. The rotating member 1 for synchronized stirring corresponds to a collet C and a tool T. The rotation shaft portion 10 corresponds to the collet C. The intermediate member 40 corresponds to a part of the tool T. The distal end portion 20 corresponds to a part of the tool T. The distal end portion 20 is, by being inserted into a bottomed hole formed at a lower surface of the intermediate member 40 having a substantially columnar shape, attached to the intermediate member 40. The lower surface of the intermediate member 40 forms a shoulder 23. Disposed between the intermediate member 40 and the distal end portion 20 are fitting keys 30. In an example shown in FIG. 3(d), due to the presence of the fitting keys 30, a clearance CP is provided, while no clearance AP is provided. The distal end portion 20 is capable of vibrating in the circumferential direction CD (see FIG. 2) relative to the intermediate member 40. The intermediate member 40 is attached to the rotation shaft portion 10 by being inserted into a bottomed hole formed at a lower surface of the rotation shaft portion 10. In this manner, a clearance AP is provided between the rotation shaft portion 10 and the intermediate member 40. The intermediate member 40 is capable of vibrating in the axial direction AD (see FIG. 2) relative to the rotation shaft portion 10. The clearances AP, CP disposed between the rotation shaft portion 10 and the distal end portion 20 may not always have to be defined by the rotation shaft portion 10 and the distal end portion 20. It may be possible that the intermediate member 40 is interposed between the rotation shaft portion 10 and the distal end portion 20, the intermediate member 40 being capable of displacing relative to each of the rotation shaft portion 10 and the distal end portion 20 individually. Accordingly, the rotating member 1 for synchronized stirring, as a whole, has the clearances AP, CP between the rotation shaft portion 10 and the distal end portion 20.

### [FIG. 3(e)]

A rotating member 1 for synchronized stirring shown in FIG. 3(e), like in FIG. 3(d), includes a rotation shaft portion 10, an intermediate member 40, and a distal end portion 20. The rotating member 1 for synchronized stirring corresponds to a holder H, a collet C, and a tool T. The rotation shaft portion 10 corresponds to the holder H. The intermediate member 40 corresponds to the collet C and a part of the tool T. The distal end portion 20 corresponds to a part of the tool T. The aspect shown in FIG. 3(e) is different from that in FIG. 3(d), in terms of the position of a clearance AP.

### [FIG. 3(f)]

In an aspect shown in FIG. 3(f), a rotating member 1 for synchronized stirring corresponds to a holder H, a collet C, and a tool T. The rotation shaft portion 10 corresponds to the holder H. The intermediate member 40 corresponds to the collet C. The distal end portion 20 corresponds to a tool T. Disposed between the intermediate member 40 and the distal end portion 20 are fitting keys 30, by which a clearance CP is provided between the intermediate member 40 and the distal end portion 20. A clearance AP is provided between the rotation shaft portion 10 and the intermediate member 40.

### [FIG. 3(g)]

In an aspect shown in FIG. 3(g), unlike in FIG. 3(f), fitting keys 30 are disposed between a rotation shaft portion 10 and an intermediate member 40, and consequently a clearance CP is provided between the rotation shaft portion 10 and the intermediate member 40. A clearance AP is provided between the intermediate member 40 and a distal end portion 20.

### [FIG. 3(h)]

In an aspect shown in FIG. 3(h), the width of a shoulder 23 is larger than that in FIG. 2. The above-mentioned ratio is not less than 2. The shoulder 23 is unified with a pin portion 21, and therefore the same vibration as generated in the pin portion 21 is generated in the shoulder 23, too. Consequently, in spite of the large width of the shoulder 23, a plastic flow of welding object members 2a and 2b is less likely to be hindered, and amplification of the plastic flow is allowed. Here, it should be noted that the shoulder 23 may be configured as a member separate from the pin portion 21 so as not to rotate together with the pin portion 21.

### [FIG. 3(i), FIG. 3(j)]

Aspects shown in FIG. 3(i) and FIG. 3(j) are different from that in FIG. 2, in terms of the shape of a distal end of a pin portion 21. In FIG. 2, the distal end of the pin portion 21 is in the shape of a tapered truncated cone (a truncated cone shape with its distal end thinner than its proximal end), whereas in FIG. 3(i), the distal end of the pin portion 21 is in the shape of an inverted truncated cone (a truncated cone shape with its distal end thicker than its proximal end). In FIG. 3(j), the distal end of the pin portion 21 has a columnar shape. In this manner, the shape of the distal end of the pin portion 21 is not particularly limited. Various shapes may be employed as the shape of the pin portion 21.

### [FIG. 3(k)]

In an aspect shown in FIG. 3(k), the above-mentioned ratio is 1, and a rotating member 1 for synchronized stirring has no shoulder. The rotating member 1 for synchronized stirring, which does not have a rotating shoulder, is capable of performing synchronized stir welding at a lower temperature.

### [FIG. 3(l), FIG. 3(m)]

In an aspect shown in FIG. 3(l), unlike in FIG. 2, a rotating member 1 for synchronized stirring has only a clearance AP in the axial direction AD (see FIG. 2). In an aspect shown in FIG. 3(m), a rotating member 1 for synchronized stirring has only a clearance CP in the circumferential direction CD (see FIG. 2). It may be acceptable that the rotating member 1 for synchronized stirring has a clearance in only any one of the axial direction AD, the circumferential direction CD, or the radial direction RD.

### [FIG. 3(n)]

In an aspect shown in FIG. 3(n), a rotating member 1 for synchronized stirring corresponds to a collet C and a tool T. The rotation shaft portion 10 corresponds to the collet C. The distal end portion 20 corresponds to a tool T. The distal end portion 20 has a pin portion 21 and a proximal end portion 22 that are configured integrally with each other. The distal end portion 20 is attached to the rotation shaft portion 10 by being loosely fitted to a large-diameter bottomed hole 17 formed at a lower surface of the rotation shaft portion 10. The large-diameter bottomed hole 17 has a diameter larger than the diameter of the proximal end portion 22, which results in a clearance RP in the radial direction RD (see FIG. 2) appearing around the proximal end portion 22. Fixed to an outer surface of the proximal end portion 22 is a fixing key 31. The rotation shaft portion 10 has a side through hole 16 disposed at a position corresponding to the fixing key 31. The presence of the side through hole 16 makes a clearance CP as well as the clearance RP. Thus, there are the clearance CP and the clearance RP between the distal end portion 20 and the rotation shaft portion 10. The distal end portion 20 is capable of vibrating in the circumferential direction CD and in the radial direction RD relative to the rotation shaft portion 10.

### [FIG. 3(o)]

In an aspect shown in FIG. 3(o), a rotating member 1 for synchronized stirring includes a rotation shaft portion 10, an intermediate member 40, and a distal end portion 20. The rotating member 1 for synchronized stirring corresponds to a holder H, a collet C, and a tool T. The rotation shaft portion 10 corresponds to the holder H. The intermediate member 40 corresponds to the collet C. The distal end portion 20 corresponds to a tool T. The distal end portion 20 has a pin portion 21 and a proximal end portion 22 that are configured integrally with each other. The distal end portion 20 is attached to the intermediate member 40 by being loosely fitted to a large-diameter bottomed hole 17 formed at a lower surface of the intermediate member 40. The large-diameter bottomed hole 17 has a diameter larger than the diameter of the proximal end portion 22, which results in a clearance RP in the radial direction RD (see FIG. 2) appearing around the proximal end portion 22. Fixed to an outer surface of the proximal end portion 22 is a fixing key 31. The intermediate member 40 has a side through hole 16 disposed at a position corresponding to the fixing key 31. The presence of the side through hole 16 makes a clearance CP as well as the clearance RP. Thus, there are the clearance CP and the clearance RP between the distal end portion 20 and the intermediate member 40. The distal end portion 20 is capable of vibrating in the circumferential direction CD and in the radial direction RD relative to the intermediate member 40. The intermediate member 40 is attached to the rotation shaft portion 10 by being inserted into a bottomed hole formed at a lower surface of the rotation shaft portion 10. In this manner, a clearance AP is provided between the rotation shaft portion 10 and the intermediate member 40. The intermediate member 40 is capable of vibrating in the axial direction AD (see FIG. 2) relative to the rotation shaft portion 10. As thus described above, in the rotating member 1 for synchronized stirring, there are the clearances AP, CP, RP between the rotation shaft portion 10 and the distal end portion 20. Accordingly, the distal end portion 20 is capable of vibrating relative to the rotation shaft portion 10 in all of the axial direction AD, the circumferential direction CD, and the radial direction RD.

### [FIG. 3(p)]

An aspect shown in FIG. 3(p) is different from the aspect shown in FIG. 2, in that clearances AP, CP are not void but the clearances AP, CP are filled with liquid 41 (for example, a lubricant). Such a rotating member 1 for synchronized stirring can also achieve vibration of the pin portion 21 as described above. That is, the clearances AP, CP are substantially void. A distal end portion 20 is substantially free within a range of the clearances AP, CP.

### [FIG. 3(q)]

An aspect shown in FIG. 3(q) is different from the aspect shown in FIG. 2, in that an elastic body 42 (for example, an O-ring) is disposed in a clearance AP between a rotation shaft portion 10 and a distal end portion 20. Such a rotating member 1 for synchronized stirring can also achieve vibration of the pin portion 21 as described above. That is, the clearances AP, CP are substantially void. A distal end portion 20 is substantially free within a range of the clearances AP, CP.

Illustrated in each of the foregoing examples is the case where the rotating member 1 for synchronized stirring includes the rotation shaft portion 10 and the distal end portion 20 with the clearance disposed between the rotation shaft portion 10 and the distal end portion 20, and the distal end portion 20 includes the pin portion 21. The rotating member 1 for synchronized stirring, however, is not limited to the foregoing examples, but may adopt the following aspects, for example.

### [FIG. 3(r)]

In an aspect shown in FIG. 3(r), a rotating member 1 for synchronized stirring corresponds to a collet C and a tool T. The rotating member 1 for synchronized stirring, which as a whole is configured integrally, includes a pin portion 21 and a shoulder 23. The rotating member 1 for synchronized stirring is configured such that a clearance AP is formed between the rotating member 1 for synchronized stirring and a holder H when the synchronized stirring is attached to the holder H. Due to the presence of the clearance AP, the rotating member 1 for synchronized stirring, including the pin portion 21, vibrates in the axial direction AD relative to an output shaft 5 at a time of synchronized stirring.

### [FIG. 3(s)]

In an aspect shown in FIG. 3(s), a rotating member 1 for synchronized stirring corresponds to a holder H. The rotating member 1 for synchronized stirring has, in its lower surface, a bottomed hole in which a collet C and a tool T are inserted. As a result of the collet C and the tool T being inserted into the bottomed hole, the collet C and the tool T are detachably disposed in the rotating member 1 for synchronized stirring. The rotating member 1 for synchronized stirring includes no pin portion. A pin portion is included in the tool T. The rotating member 1 for synchronized stirring has, in its upper surface, a bottomed hole for receiving an output shaft 5. As a result of the output shaft 5 being inserted into the bottomed hole, the rotating member 1 for synchronized stirring is attached to the output shaft 5. The rotating member 1 for synchronized stirring is configured such that when the rotating member 1 for synchronized stirring is attached to the output shaft 5, a clearance AP is formed between the output shaft 5 and the rotating member 1 for synchronized stirring. Consequently, at a time of synchronized stirring, the clearance AP is formed between the output shaft 5 and the pin portion of the tool T. The clearance AP allows the pin portion to vibrate with respect to the output shaft 5.

### [FIG. 3(t)]

In an aspect shown in FIG. 3(t), a rotating member 1 for synchronized stirring includes a rotation shaft portion 10 and a distal end portion 20. The rotating member 1 for synchronized stirring corresponds to a holder H. The rotation shaft portion 10, which is an upper portion of the holder H, is attached to an output shaft 5. The distal end portion 20, which is a lower portion of the holder H, is configured so as to be rotated by rotation received from the rotation shaft portion 10, and is positioned toward a distal end relative to the rotation shaft portion 10. The distal end portion 20 is configured such that a collet C and a tool T is detachably attachable thereto. To be specific, the distal end portion 20, though not having a pin portion, has a proximal end portion 22 to which a pin portion is detachably attachable. Clearances AP, CP are disposed between the rotation shaft portion 10 and the distal end portion 20 so as to allow the pin portion to vibrate relative to the rotation shaft portion 10.

The rotating member 1 for synchronized stirring is not limited to the foregoing examples. It is just required that the rotating member 1 for synchronized stirring be configured such that a clearance can be formed between the output shaft 5 and the pin portion 21 when the rotating member 1 for synchronized stirring is attached to the output shaft 5. It is not always necessary that the rotating member 1 for synchronized stirring can be divided into components, namely, a holder H, a collet C, and a tool T.

### <Synchronized Stir Welding Apparatus>

A synchronized stir welding apparatus according to First Embodiment is the synchronized stir welding apparatus 3 shown in FIG. 2(a) and FIG. 2(b), including the rotating member 1 for synchronized stirring. The synchronized stir welding apparatus 3 includes the driving mechanism 4 having the output shaft 5, and the pin portion 21. The pin portion 21 is provided such that there are the clearances AP, CP between the output shaft 5 and the pin portion 21, the clearances AP, CP allowing the vibrations AV, CV of the pin portion 21 relative to the output shaft 5. In the synchronized stir welding apparatus 3, due to the clearances AP, CP, the vibrations AV, CV of the pin portion 21 at a time of synchronized stirring have a larger amplitude and/or a higher frequency than a vibration (base vibration) of the output shaft 5. Although the synchronized stir welding apparatus 3 according to this embodiment includes the rotating member 1 for synchronized stirring having the clearances AP, CP, the rotating member 1 for synchronized stirring may not always have to be provided, and the synchronized stir welding apparatus 3 is just required to have a clearance between the output shaft 5 and the pin portion 21. The synchronized stir welding apparatus is for fillet welding. The synchronized stir welding apparatus may be dedicated to fillet welding, but it is not necessarily required to be exclusively for fillet welding.

Here, the numerical values, the materials, the structures, the shapes, and the like shown in the foregoing embodiment are only illustrative, and different numerical values, materials, structures, shapes, and the like may be adopted as necessary. In the foregoing embodiment, the pin portion 21 is positioned upward, the welding object member 2 (such as 2a, 2b, etc.) is positioned downward, and the pin portion 21 and the welding object member 2 (such as 2a, 2b, etc.) face each other in the up-down direction. Specifically, in the example shown in FIG. 1, the pin portion 21 is inclined, while in the examples shown in FIG. 2 to FIG. 5, the pin portion 21 is oriented in the vertical direction; however, in either case, it can be said that the pin portion 21 is directed in the up-down direction. That is, the axial direction is coincident with the up-down direction. The axial direction, however, may not always have to be coincident with the up-down direction. The axial direction is not particularly limited, and may be the horizontal direction, for example. It may be possible that in a case where the axial direction is the up-down direction, the rotating member for synchronized stirring is positioned downward while the welding object member is positioned upward. The axial direction may not always have to be fixed. In a synchronized stir welding apparatus configured with the rotating member for synchronized stirring installed in the above-mentioned portable type apparatus, the axial direction may change during an operation.

### <Second Embodiment>

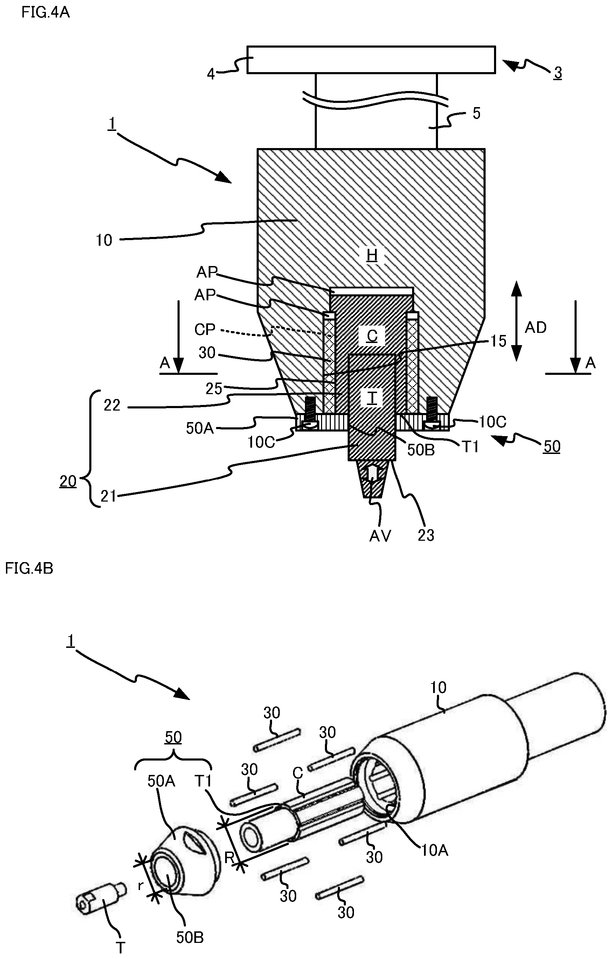

FIG. 4(a) is a cross-sectional view schematically showing a rotating member for synchronized stirring according to Second Embodiment. In Second Embodiment, unless otherwise specified, configurations corresponding to those in First Embodiment are denoted by the same reference numerals as in First Embodiment, and descriptions thereof are omitted.

The rotating member 1 for synchronized stirring according to Second Embodiment is configured such that the pin portion 21 has a fall-off prevention structure 50 that is configured to prevent the pin portion 21 from falling off the output shaft 5. The fall-off suppressing structure 50 is configured so that the tool T including the pin portion 21 does not fall off from the rotation shaft portion 10 together with the collet C. The fall-off suppressing structure 50 includes a fall-off suppressing member 50A with a pin portion insertion hole 50B formed therein, a fall-off suppressing member mounting member 10C, and a step T1 described later. The fall-off suppressing member 50A has a shape of a flat plate. The fall-off suppressing member 50A is fixed to the rotation shaft portion 10 by the fall-off suppressing member mounting member 10C. The pin portion insertion hole 50B is at least smaller than the maximum diameter of the collet C and has a size that allows the pin portion 21 to be exposed to the outside. The fall-off suppressing structure 50 is configured to suppress falling-off of the tool T by engagement of the stepped portion T1, which is formed by a difference in outer diameter between the collet C and the tool T, with the pin portion insertion hole 50B. That is, the fall-off suppressing structure 50 ensures that the tool T is exposed to the outside through the pin portion insertion hole 50B, allowing the pin portion 21 to be positioned at an intended welding position of the welding object members 2a and 2b (e.g., an intended welding line position along the inner corner formed by a pair of abutted welding object members 2a and 2b), while also suppressing the tool T from falling out due to the provision of the clearance CP. Such falling-out of the tool T is mainly caused by gravity due to the own weight of the tool T, including the weight of the pin portion 21. In particular, when the tool T is configured to be detachable and replaceable, the problem of falling-out tends to become prominent. Further, from the perspective of welding quality, it is preferable that the clearance AP is provided to an extent that allows the tool T including the pin portion 21 to fall off from the rotation shaft portion 10 together with the collet C, rather than being provided between the pin portion 21 and the output shaft 5 with a tolerance to an extent that keeps the pin portion 21 from falling off; however, as the clearance AP increases, the risk of the tool T falling off also increases.

Such a risk may potentially be reduced, depending on the viscosity of the hydraulic oil, by filling the clearance AP portion with a flame-retardant hydraulic oil such as a water-glycol-based hydraulic oil. However, in this example, since the weight of the collet C and the tool T that are integrally coupled is relatively large, the viscosity of the hydraulic oil alone is insufficient to support that weight. Further, in a case where the rotating member 1 for synchronized stirring is installed in a robot-type welding apparatus described later, centrifugal force and inertia force are applied to the rotating member 1 for synchronized stirring when the rotating member 1 for synchronized stirring is rotated, swung, and/or moved by a robot arm, thereby further increasing the possibility that the tool T falls off. However, the fall-off suppressing structure 50 can suppress the fall-off of the tool T. The configuration of the fall-off suppressing structure 50 is not limited to that of the present embodiment. The fall-off suppressing member mounting member 10C is a screw, but is not limited to this. Further, while the fall-off suppressing member 50A may have a cap shape with a screw groove formed on the inner circumference, the corresponding screw groove may be formed on the outer peripheral surface of the rotation shaft portion 10. Consequently, it is possible to fix the fall-off suppressing member 50A to the rotation shaft portion 10 without using the fall-off suppressing member mounting member 10C. This aspect is described in the following modification.

Further, since the clearance AP is provided as in the present teaching, there is an advantage that replacement of the tool T becomes easier. In particular, when a general user or an operator unfamiliar with handling replaces the tool T, the tool T can be held by hand and removed without the need for dedicated equipment for tool replacement, and can be easily replaced with a new tool.

### <Modification of Second Embodiment>

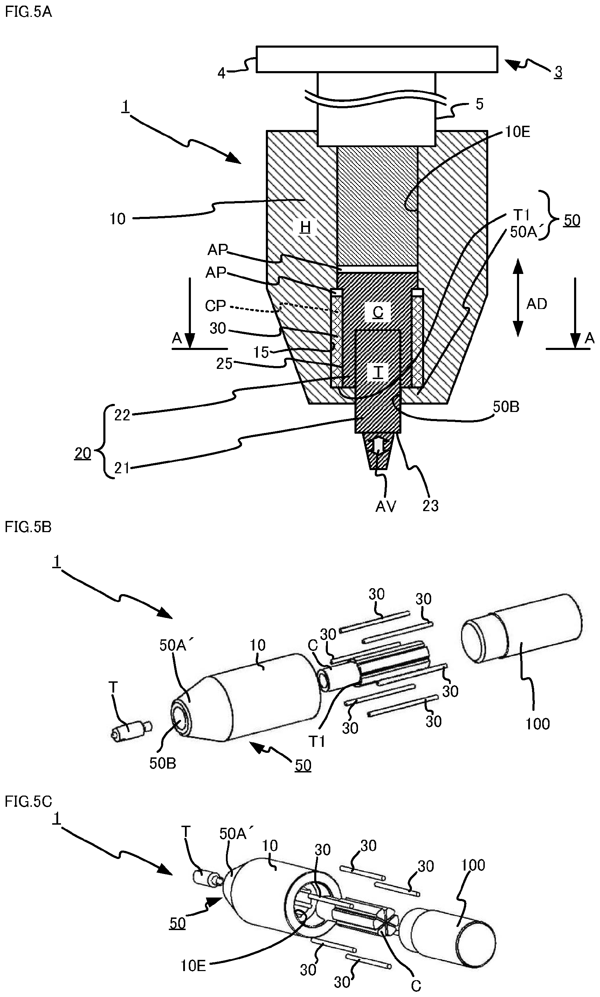

FIG. 4(b) is a perspective view schematically showing a rotating member 1 for synchronized stirring according to a modification of the Second Embodiment. In this modification, unless otherwise specified, configurations corresponding to those in the above embodiment are denoted by the same reference numerals as in the above embodiment, and descriptions thereof are omitted. In the rotating member 1 for synchronized stirring according to this modification, the collet C and the tool T, which are integrally formed, are inserted from a distal opening 10A of the rotation shaft portion 10 into a bottomed hole formed in the rotation shaft portion 10 together with the fitting key 30, whereby the collet C and the tool T are mounted within the distal opening 10A of the rotation shaft portion 10. The fall-off prevention structure 50 includes a fall-off suppressing member 50A and a step T1. The fall-off suppressing member 50A is configured such that a diameter r of the pin portion insertion hole 50B formed in the fall-off suppressing member 50A and an outer dimension R of the collet C satisfy r < R. The distal end of the tool T is kept from being immersed into the rotation shaft portion 10 together with the collet C integrally formed with the tool T, and the distal end of the tool T is exposed to the outside from the pin portion insertion hole 50B. As described above, the fall-off suppressing member 50A and the rotation shaft portion 10 are fixed to each other by their respective screw grooves, which can keep the fall-off suppressing member 50A and the rotation shaft portion 10 from separating during synchronized stir welding. The structure for fixing the fall-off suppressing member 50A to the rotation shaft portion 10 is not limited to this example. Further, the tool T is configured such that the outer diameter of the tool T is smaller than the diameter r of the pin portion insertion hole 50B. As a result, by grasping and rotating the tool T attached to the collet C, the tool T can be separated from the collet C and withdrawn through the pin portion insertion hole 50B of the fall-off suppressing member 50A. It is also possible to attach other tool T to the collet C through the pin portion insertion hole 50B. Therefore, only the tool T can be replaced. In this embodiment, the tool T and the collet C can be separated; however, the tool T and the collet C may be integrally formed so as not to be separable. In this case, the fall-off suppressing member 50A is removed from the rotation shaft portion 10, and the collet C and the tool T are replaced. The rotating member 1 for synchronized stirring shown in FIG. 4(a) and FIG. 4(b) has a distal-end insertion-type fall-off suppressing structure 50 into which the collet C and the tool T are inserted from the distal end; however, the rotating member for synchronized stirring is not limited to these examples. The rotating member for synchronized stirring may have a rear-end insertion-type fall-off suppressing structure into which the collet C and the tool T are inserted from the rear end, as shown in FIG. 5(a) to FIG. 5(c).

### <Third Embodiment>

FIG. 5(a) is a cross-sectional view schematically showing a rotating member 1 for synchronized stirring according to Third Embodiment. In Third Embodiment, unless otherwise specified, configurations corresponding to those in the above embodiment are denoted by the same reference numerals as in the above embodiment, and descriptions thereof are omitted. The rotating member 1 for synchronized stirring according to Third Embodiment includes a fall-off suppressing unit 50A' integrally formed with the rotation shaft portion 10, instead of the fall-off suppressing member 50A described above. The fall-off suppressing unit 50A' includes a pin portion insertion hole 50B. A rear hole 10E is formed at a rear end of the rotation shaft portion 10. The tool T and the collet C integrally configured with each other are inserted from the rear hole 10E together with the fitting key 30, and further, a closing member 100 is provided to close the rear hole 10E from the rear. The closing member 100 and the rotation shaft portion 10 have corresponding screw grooves formed therein, and the closing member 100 is fixed to the rotation shaft portion 10 by those screw grooves. As a result, while ensuring the clearance AP, the fall-off of the tool T and the collet C can be suppressed, and constant exposure of the distal end of the tool T can be achieved. In this embodiment, the fall-off suppressing structure 50 includes a fall-off suppressing unit 50A', a stepped portion T1, and a closing member 100.

### <Modification of Third Embodiment>

FIG. 5(b) and FIG. 5(c) are perspective views schematically showing a rotating member 1 for synchronized stirring according to a modification of Third Embodiment. In this modification, unless otherwise specified, configurations corresponding to those in the above embodiment are denoted by the same reference numerals as in the above embodiment, and descriptions thereof are omitted. The rotating member 1 for synchronized stirring according to FIG. 5(b) and FIG. 5(c) is, similarly to the rotating member 1 for synchronized stirring according to FIG. 5(a), configured integrally with the tool T and the collet C inserted into the rear hole 10E from the rear end, and the rear hole 10E is closed by the closing member 100. The fixing structure of the closing member 100 is not limited to a screw structure. For example, any structure may be adopted, such as a press fit, or forming a retaining-screw insertion hole penetrating the outer periphery of the rotation shaft portion 10 and fixing the tool by a headless screw.

### Reference Signs

- 1: rotating member for synchronized stirring
- 2a, 2b, 2c: welding object member
- 3: synchronized stir welding apparatus
- 4: driving mechanism
- 5: output shaft (of driving mechanism)
- 10: rotation shaft portion
- 15: groove
- 16: side through hole
- 17: large-diameter bottomed hole
- 20: distal end portion
- 21: pin portion
- 22: proximal end portion
- 23: shoulder
- 24: enlarged-diameter portion
- 25: groove
- 30: fitting key
- 31: fixing key
- 40: intermediate member
- 41: liquid
- 41: elastic body

## Claims

1. A manufacturing method for a fillet-welded component,
the manufacturing method comprising a fillet welding step where two welding object members are fillet welded,
the fillet welding step being implemented by a synchronized stir welding apparatus,
wherein the synchronized stir welding apparatus comprises: an output shaft; a driving mechanism configured to rotate the output shaft; and a pin portion provided on a distal end of the output shaft, configured to be rotationally driven by rotation transmitted from the driving mechanism, and to be inserted into the two welding object members during synchronized stirring, the pin portion being configured such that there exists, between the output shaft and the pin portion, a clearance that allows vibration of the pin portion with respect to the output shaft, the clearance being a void or substantially a void, and due to the clearance, the pin portion being free or substantially free with respect to the output shaft within a range of the clearance, and
wherein, in the fillet welding step, the rotating pin portion is inserted into the two welding object members at an inner corner of an angle formed by the two welding object members, thereby performing fillet welding by synchronized stir welding.

2. The manufacturing method according to claim 1, wherein:
the synchronized stir welding apparatus comprises a rotating member for synchronized stirring provided on the output shaft and either including the pin portion or configured such that the pin portion is detachably attachable thereto; and
the rotating member for synchronized stirring is configured, in a state of being provided on the output shaft, to create a clearance between the output shaft and the pin portion, the clearance allowing vibration of the pin portion relative to the output shaft.

3. The manufacturing method according to claim 1 or 2, wherein
the pin portion is configured such that, due to the clearance, during synchronized stirring, a vibration of the pin portion has a larger amplitude and/or a higher frequency than a vibration of the output shaft.

4. The manufacturing method according to any one of claims 1 to 3, wherein
the pin portion is configured such that a vibration of the pin portion is passively generated by contact with plastic flow components of the two welding object members within a range of the clearance.

5. The manufacturing method according to any one of claims 1 to 4, wherein
the pin portion is configured such that, due to the clearance, a vibration of the pin portion is generated in at least one of an axial direction, a circumferential direction, and a radial direction of the pin portion.

6. The manufacturing method according to any one of claims 1 to 5, wherein
the fillet welding step is performed without use of an auxiliary tool, the auxiliary tool being configured not to rotate together with the pin portion and to apply pressure to a plastic flow portion generated by synchronized stir welding in the two welding object members at the inner corner.

7. The manufacturing method according to any one of claims 1 to 6, wherein:
an enlarged-diameter portion is provided on a proximal end of the pin portion so as to extend from the proximal end of the pin portion, and the enlarged-diameter portion is configured to satisfy at least one of the following two requirements: (i) a diameter thereof is larger than a diameter of the pin portion; and (ii) the diameter thereof increases toward its proximal end; and
the fillet welding step is a step of inserting the rotating pin portion into the two welding object members at an inner corner of an angle formed by the two welding object members, thereby performing fillet welding by synchronized stir welding, to satisfy either of the following further requirements: (iii) a plastic flow portion generated by synchronized stir welding in the two welding object members at the inner corner and a side surface of the enlarged-diameter portion do not make line-contact with each other; or (iv) the plastic flow portion and the enlarged-diameter portion do make line-contact with each other in a state in which both circumferential sides of a line-contact position between the plastic flow portion and the enlarged-diameter portion are spatially open.

8. The manufacturing method according to claim 7, wherein:
the enlarged-diameter portion is configured to satisfy at least the requirement of (ii);
a taper angle of the enlarged-diameter portion has an angle equal to or less than an angle of a corner formed by the two welding object members; and
the fillet welding step is a step of inserting the pin portion into the two welding object members at an inner corner of an angle formed by the two welding object members while the pin portion rotates, thereby performing fillet welding by synchronized stir welding, so that the plastic flow portion generated by synchronized stir welding in the two welding object members at the inner corner and a side surface of the enlarged-diameter portion do not make contact with each other.

9. The manufacturing method according to any one of claims 1 to 6, wherein
in the fillet welding step, the rotating pin portion is inserted into the two welding object members at an inner corner of an angle formed by the two welding object members, and moves the rotating pin portion along the inner corner, thereby performing fillet welding by synchronized stir welding.

10. The manufacturing method according to any one of claims 1 to 9, further comprising
an arrangement step of arranging the two welding object members before the fillet welding step, to allow the two welding object members to form an angle and to enable, in the fillet welding step, insertion of the pin portion into the two welding object members at an inner corner of the angle.

11. A synchronized stir welding apparatus for fillet welding, comprising:
an output shaft;
a driving mechanism configured to rotate the output shaft;
a pin portion provided on a distal end of the output shaft, configured to be rotationally driven by rotation transmitted from the driving mechanism, and to be inserted into two welding object members during synchronized stirring;
a holding mechanism that holds the two welding object members;
a moving mechanism that changes a relative position between the pin portion and the two welding object members,
wherein
the pin portion is configured such that there exists, between the output shaft and the pin portion, a clearance that allows vibration of the pin portion with respect to the output shaft, the clearance being a void or substantially a void, and due to the clearance, the pin portion being free or substantially free with respect to the output shaft within a range of the clearance, and
the moving mechanism is configured to insert the rotating pin portion into the two welding object members at an inner corner of an angle formed by the two welding object members, thereby performing fillet welding by synchronized stir welding.

12. The synchronized stir welding apparatus according to claim 11, further comprising:
a rotating member for synchronized stirring provided on the output shaft and including the pin portion,
wherein the rotating member for synchronized stirring is configured, in a state of being provided on the output shaft, to create a clearance between the output shaft and the pin portion, the clearance allowing vibration of the pin portion relative to the output shaft.

13. The synchronized stir welding apparatus according to claim 11 or 12, wherein
the pin portion is configured such that, due to the clearance, during synchronized stirring, a vibration of the pin portion has a larger amplitude and/or a higher frequency than a vibration of the output shaft.

14. The synchronized stir welding apparatus according to any one of claims 11 to 13, wherein
the pin portion is configured such that a vibration of the pin portion is passively generated by contact with plastic flow components of the two welding object members within a range of the clearance.

15. The synchronized stir welding apparatus according to any one of claims 11 to 14, wherein
the pin portion is configured such that, due to the clearance, a vibration of the pin portion is generated in at least one of an axial direction, a circumferential direction, and a radial direction of the pin portion.

16. The synchronized stir welding apparatus according to any one of claims 11 to 15, wherein
the synchronized stir welding apparatus operates without use of an auxiliary tool,
the auxiliary tool being configured not to rotate together with the pin portion and to a plastic flow portion generated by synchronized stir welding in the two welding object members at an inner corner.

17. The synchronized stir welding apparatus according to any one of claims 11 to 16, wherein:
an enlarged-diameter portion is provided on a proximal end of the pin portion so as to extend from the proximal end of the pin portion, and the enlarged-diameter portion is configured to satisfy at least one of the following two requirements: (i) a diameter thereof is larger than a diameter of the pin portion; and (ii) the diameter thereof increases toward its proximal end; and
the moving mechanism is configured to insert the rotating pin portion into the two welding object members at an inner corner of an angle formed by the two welding object members, thereby performing fillet welding by synchronized stir welding, to satisfy either of the following further requirements: (iii) a plastic flow portion generated by synchronized stir welding in the two welding object members at the inner corner and a side surface of the enlarged-diameter portion do not make line-contact with each other; or (iv) the plastic flow portion and the enlarged-diameter portion do make line-contact with each other in a state in which both circumferential sides of a line-contact position between the plastic flow portion and the enlarged-diameter portion are spatially open.

18. The synchronized stir welding apparatus according to claim 17, wherein:
the enlarged-diameter portion is configured to satisfy at least the requirement of (ii);
a taper angle of the enlarged-diameter portion has an angle equal to or less than an angle of a corner formed by the two welding object members; and
the moving mechanism is configured to insert the pin portion into the two welding object members at an inner corner of an angle formed by the two welding object members while the pin portion rotates, thereby performing fillet welding by synchronized stir welding, so that the plastic flow portion generated by synchronized stir welding in the two welding object members at the inner corner and a side surface of the enlarged-diameter portion do not make contact with each other.

19. The synchronized stir welding apparatus according to any one of claims 11 to 18, wherein
the moving mechanism is configured to insert the rotating pin portion into the two welding object members at an inner corner of an angle formed by the two welding object members, and to move the rotating pin portion along the inner corner, thereby performing fillet welding by synchronized stir welding.

20. The synchronized stir welding apparatus according to any one of claims 11 to 19, wherein
the holding mechanism is
configured to arrange and hold the two welding object members to allow the two welding object members to form an angle and to enable the moving mechanism to insert the pin portion into the two welding object members at an inner corner of the angle.

21. A fillet-welded component manufactured by synchronized stir welding by the manufacturing method according to any one of claims 1 to 10 or by the synchronized stir welding apparatus according to any one of claims 11 to 20.

22. The fillet-welded component manufactured by synchronized stir welding according to claim 21, wherein the fillet-welded component manufactured by synchronized stir welding is applied to any one of an automobile, a railway vehicle, an aircraft, a ship, and a rocket.

23. The fillet-welded component manufactured by synchronized stir welding according to claim 21, wherein the fillet-welded component manufactured by synchronized stir welding is applied to any one of an electrode component, an air conditioning device, a water-cooled or air-cooled power control unit, a water-cooled or air-cooled battery case, a door panel, a shock absorber, a suspension link, a waveguide, an antenna, a motor cover, a brewing tank, a vacuum device component, a sputtering target material, and an embedded heater.

24. The fillet-welded component manufactured by synchronized stir welding according to any one of claims 21 to 23, wherein
the fillet-welded component manufactured by synchronized stir welding is:
a component manufactured by fillet welding through synchronized stir welding of the two welding object members having different thicknesses, or
a component manufactured by fillet welding through synchronized stir welding of the two welding object members made of different materials.
